# NEUE EUROPÄISCHE PATENTSCHRIFT

(11) **EP 1 744 883 B2**
(45) Veröffentlichungstag und Bekanntmachung des Hinweises auf die Entscheidung über den Einspruch: **13.02.2019**
(45) Hinweis auf die Patenterteilung: 27.04.2011
(21) Anmeldenummer: 05735102.5
(22) Anmeldetag: 27.04.2005
(51) Int. Cl.: B41F 33/00

(54) **VERFAHREN ZUR INLINE-ÜBERWACHUNG DER DRUCKQUALITÄT BEI BOGENOFFSETDRUCKMASCHINEN**
PROCESS FOR THE ON-LINE MONITORING OF THE PRINTING QUALITY IN SHEET-FED OFFSET PRINTING PRESSES
PROCEDE DE CONTROLE EN LIGNE DE LA QUALITE D'IMPRESSION DANS UNE PRESSE OFFSET ALIMENTEE PAR FEUILLES

(30) Priorität: 03.05.2004 DE 102004021600
(43) Veröffentlichungstag der Anmeldung: 24.01.2007
(73) Patentinhaber: Heidelberger Druckmaschinen AG, 69115 Heidelberg (DE); X-Rite Switzerland GmbH, 8105 Regensdorf (CH)
(72) Erfinder: GEISSLER, Wolfgang, 76669 Bad Schönborn (DE); DE VRIES, Loris, CH-8107 Buchs (CH); EHBETS, Peter, CH-8046 Zürich (CH); LANGE, Robert, 57368 Lennestadt - Grevenbrück (DE); MUTH, Frank, 76139 Karlsruhe (DE); RIEGEL, Christopher, 76646 Bruchsal (DE); SCHUMANN, Frank, 69118 Heidelberg (DE)
(74) Vertreter: Haust, Christof
(86) Internationale Anmeldenummer: PCT/EP2005/004477
(87) Internationale Veröffentlichungsnummer: WO 2005/108082

(56) Entgegenhaltungen:
- DE-A- 10 248 634
- DE-A1- 2 150 319
- DE-A1- 3 015 103
- DE-A1- 3 100 304
- GB-A- 2 066 949
- US-A- 5 095 818
- US-A- 5 329 852
- US-A- 5 724 437
- US-A- 5 724 437
- US-B1- 6 192 140

## Beschreibung

Die vorliegende Erfindung betrifft ein Verfahren zur Überwachung der Druckqualität während des Druckprozesses in einer Druckmaschine zur Verarbeitung bogenförmiger Bedruckstoffe mit wenigstens einem Druckwerk und mit einer den Bedruckstoff erfassenden Abtasteinrichtung sowie einem Rechner.

Bei jedem Druckvorgang wird das Ziel zu erreichen versucht, dass die Druckexemplare soweit wie möglich der Originaldruckvorlage entsprechen. Dazu ist eine aufwendige Qualitätskontrolle und Überwachung der bedruckten Bedruckstoffe in einem Druckereibetrieb durch das Druckpersonal erforderlich. Nach dem Stand der Technik geschieht dies durch visuelle Begutachtung durch das Bedienpersonal und durch den Einsatz von optischen Messgeräten, welche entweder densitometrisch oder spektral messen. Bei Bogenoffsetdruckmaschinen muss dazu ein Bogen aus dem Ausleger entnommen werden, welcher üblicherweise auf ein Bogenauflagepult abgelegt wird. Auf diesem Pult wird der Bogen mit einer genormten Beleuchtungsquelle ausgeleuchtet und unter zu Hilfenahme optischer Messtechnik vermessen oder visuell begutachtet. Dieser Vorgang kostet jedoch Zeit, wobei erschwerend hinzu kommt, dass die Druckmaschine während der Qualitätskontrolle weiter druckt und dabei unter Umständen Makulatur anfallt, wenn der begutachtete Bogen noch nicht den Erwartungen entspricht. Da eine Druckmaschine nach jeder Unterbrechung des Druckvorgangs eine gewisse Anzahl Bogen benötigt bis der Druckprozess wieder einen stabilen Zustand erreicht hat, ist Makulatur auch nicht einfach durch schnelles Abschalten der Druckmaschine während der Bedruckstoffkontrolle zu verhindern. Weiterhin wird zur Begutachtung des Druckbogen Druckpersonal benötigt, welches während der Qualitätskontrolle für andere Tätigkeiten nicht zur Verfügung steht. Da während der Einrichtphase einer Druckmaschine viele Einstellmöglichkeiten insbesondere im Farbwerksbereich vorgenommen werden müssen, fällt normalerweise eine Makulatur zwischen 150 und 400 Bogen an. Es kommt noch erschwerend hinzu, dass der Druckprozess im allgemeinen nur schwer reproduzierbar ist, da das Druckresultat von sehr vielen Parametern wie Farbe, Temperatur, Wasser, Papier, Druckgeschwindigkeit, Gummituch, Beschaffenheit der Druckplatte, etc. abhängt. All diese Parameter verändern sich meist in irgendeiner Form von Druckjob zu Druckjob, es ist daher nicht ausreichend, die Einstellung eines Druckjobs zu speichern und für Wiederholaufträge genauso abzurufen, denn z. B. könnte sich inzwischen die Lufttemperatur oder Luftfeuchtigkeit geändert haben, so dass auch für denselben Druckjob neue Einstellungen aufgrund geänderter Umweltbedingungen vorgenommen werden müssen. Auch hier ist eine Korrektur der Farbwerkseinstellungen notwendig, die automatisiert werden sollen.

Da bei Rollenoffsetdruckmaschinen die bedruckten Zeitungsbahnen nicht einfach der Maschine entnommen werden können, gibt es hier bereits Messsysteme, welche die Qualität einer bedruckten Bahn spektral oder densitometrisch zu erfassen versuchen. Ein Verfahren zum Betreiben einer Abtastvorrichtung zur optischen Dichtemessung ist aus der DE 100 23 127 A1 bekannt. Hierbei wird die bedruckte Bahn in einer Rollenoffsetdruckmaschine, welche das letzte Druckwerk verlässt, über eine Umlenkwalze geführt, wobei parallel zur Umlenkwalze eine Abtastvorrichtung zur optischen Dichtemessung, Farbmessung oder Spektralmessung angebracht ist. Auf diese Art und Weise kann die Qualität der bedruckten Bahn ermittelt werden. In der Beschreibung der Ausführungsbeispiele wird angedeutet, dass das in der Anmeldung offenbarte Verfahren auch beim Druck auf bogenförmige Bedruckstoffe angewendet werden kann. Eine genaue Beschreibung, wie dies tatsächlich zu geschehen hat, ist der Anmeldung jedoch nicht zu entnehmen, wobei insbesondere nicht das Problem gelöst wird, dass bei bogenförmigen Bedruckstoffen die Führung der bogenförmigen Bedruckstoffe über eine Umlenkwalze wie in der DE 123 127 A1 gar nicht möglich ist, denn bogenförmige Bedruckstoffe müssen mindestens an einem Punkt durch eine Haltevorrichtung wie Greifer oder den Druckspalt eines Druckwerkes gehalten werden. Aus diesem Grund ist die in der DE 123 127 A1 offenbarte Vorrichtung nicht für die Qualitätsbegutachtung von bogenförmigen Bedruckstoffen während des Druckprozesses in Bogenoffsetdruckmaschinen geeignet.

Aus dem US-Patent 5,724,437 ist eine Bogenrotationsdruckmaschine mit mehreren Druckwerken bekannt, welche mehrere Messbalken aufweist, um die Druckqualität von bedruckten Bogen zu überprüfen. Die Farbqualität der bedruckten Bogen wird dabei farbmetrisch erfasst mittels CCD-Elementen. Die Messung des Bogens findet statt,während er auf dem Gegendruckzylinder eines Druckwerks aufliegt. Um einen konstanten Abstand zwischen dem Bogen und der CCD-Messeinrichtung zu erhalten, weist der Messbalken eine Blasluftdüse auf, welche Blasluft in Richtung des Druckbogens bläst, um so den Abstand zwischen Messbalken und Druckbogen konstant zu halten.

Die Patentschrift US 5,095,818 zeigt einen Messzylinder zum Erfassen des Druckbildes von bogenförmigen Bedruckstoffen nach dem letzten Druckwerk im Ausleger einer Bogendruckmaschine. Im Innern des Messzylinders sind optische Mittel vorhanden, welche den Druckbogen abtasten. Durch diese Abtastung können Farbmessstreifen auf dem Druckbogen vermessen und so die Druckqualität beurteilt werden. Für den Messvorgang wird der jeweilige Druckbogen mittels Greifern um den Messzylinder herumgeschlungen.

Eine weitere Einrichtung zur Qualitätskontrolle von Druckbogen geht aus der DE 30 15 103 A1 hervor. Hier wird in einer Bogenrotationsdruckmaschine die Farbintensität eines Bogens nach dem letzten Aufdruck durch ein Farbdensitometer erfasst. Das Farbdensitometer ist vorzugsweise am Druckzylinder des letzten Druckwerks der Druckmaschine angebracht und auf einer quer zu dem Druckzylinder verlaufenden Traverse verschiebbar angeordnet.

Das Patent US 5,329,852 offenbart eine Druckbogenkontrolleinrichtung im Ausleger einer Bogendruckmaschine. Dazu ist ein Saugkasten vorhanden, welcher die Bogen im Ausleger den Greiferketten entnimmt und in einer ebenen Fläche zur Bildinspektion ansaugt. Eine solche Vorrichtung ist aufgrund ihres Platzbedarfs des Saugkastens nicht für den Einbau in Druckwerke einer Bogenrotationsdruckmaschine geeignet.

Eine weitere Bogeninspektionseinrichtung für Ausleger einer Bogendruckmaschine geht aus dem Patent US 6,192,140 B1 hervor. Hier wird über Förderelemente der Bogen nach dem letzten Druckwerk zwei Bogeninspektionstrommeln zugeführt, welche jeweils eine Seite des Bogens mittels CCD-Kameras abtasten. Dazu wird der Bogen an jeder der Trommeln mittels Greifern gehalten und am anderen Ende mittels Saugluftdüsen gestreckt und gespannt. Bei der Übergabe von der ersten zur zweiten Inspektionstrommel wird der Bogen gewendet, so dass Vorder- und Rückseite des Druckbogens inspiziert werden können.

Es ist daher Aufgabe der vorliegenden Erfindung, ein Verfahren zur Überwachung der Druckqualität in Druckmaschinen zu schaffen, welches auch zum Einsatz in Bogendruckmaschinen geeignet ist.

Die vorliegende Aufgabe wird durch Patentanspruch 1 erfindungsgemäß gelöst. Weitere vorteilhafte Ausgestaltungen der Erfindung sind den Unteransprüchen, der Beschreibung und den Zeichnungen zu entnehmen. Die vorliegende Erfindung zeichnet sich zunächst dadurch aus, dass der bogenförmige Bedruckstoff von wenigstens einem bogenführenden Element definiert an der Abtasteinrichtung vorbei führbar ist. Durch das bogenführende Element wird der bogenförmige Bedruckstoff fixiert und kann erst dann von der Abtastvorrichtung zuverlässig vermessen werden. Als bogenführende Elemente kommen Greifer auf bogenführenden Zylindern einer Druckmaschine in Frage aber auch der Spalt zwischen zwei bogenführenden Zylindern selbst. So kann die Abtasteinrichtung zur Qualitätskontrolle eines Bedruckstoffes nahe am Druckspalt eines Druckwerks angebracht sein. Die Erfassung der Druckqualität bei bogenförmigen Bedruckstoffen nahe am Druckspalt bietet den Vorteil, dass hier der Bogen an seiner Vorderkante durch Greifer des Druckzylinders und den Druckspalt des Druckwerks geführt wird. Der Bogen wird dabei über die Oberfläche des Zylinders gespannt und besitzt somit eine definierte Lage gegenüber der Abtastvorrichtung. Diese Führung ist bei der Qualitätskontrolle von bogenförmigen Bedruckstoffen eminent wichtig, da Bogen im Gegensatz zur bahnförmigen Bedruckstoffen nicht über Umlenkwalzen geführt werden können, sondern mindestens an einer Seite durch eine Greifervorrichtung oder den Druckspalt geführt werden müssen. Je näher die Abtasteinrichtung am Druckspalt angeordnet ist, desto weniger besteht die Gefahr, dass der Bedruckstoff während der Messung Flatterbewegungen ausführt und so die Messergebnisse verfälscht. Als weiteres bogenführendes Element kommen auch bogenführende Zylinder mit Blas-/Saugluftdüsen in Frage, da auch hier der Bogen mittels der Luft ausreichend geführt wird und so Flatterbewegungen auf ein Minimum reduziert sind. Die Abtasteinrichtung kann also prinzipiell an jedem Ort einer Bogendruckmaschine eingebaut sein, am dem der Bogen irgendwie geführt wird.

In einer ersten vorteilhaften Ausgestaltung der Erfindung ist vorgesehen, dass die Abtasteinrichtung farblich, densitometrisch oder spektral misst. Farbliche Messung bedeutet, dass Messwerte erfasst werden, welche z.B. im XYZ-, RGB-, oder Lab-Farbraum dargestellt werden: Diese farbliche Messung wird oft auch als farbmetrische Messung bezeichnet. Die spektrale Messung bietet den Vorteil, dass auch Sonderfarben und Rasterdruckfelder eindeutig auszumessen und entsprechend nachzuregeln sind. Mittels ein oder mehreren Spektrometem in der Abtasteinrichtung ist dadurch möglich, die Werte von ein oder mehreren Farbzonen nacheinander oder gleichzeitig auszumessen und diese Werte an die Recheneinheit der Druckmaschine zu senden, so dass der Rechner diese Istwerte mit entsprechenden Sollwerten vergleichen kann und gegebenenfalls Einstellungen in der Druckmaschine korrigieren kann.

Gemäß der Erfindung ist vorgesehen, dass der Bedruckstoff im Druckwerk während des Abtastvorgangs von einem Transportgreifer einer bogenführenden Trommel und dem Druckspalt des Druckwerkes gehalten wird. Um die Messergebnisse bei der Druckqualitätskontrolle nicht zu verfälschen, darf sich der Bedruckstoff so wenig wie möglich bewegen, da insbesondere der Abstand zwischen Bedruckstoff und Abtasteinrichtung möglichst während des Messvorgangs nicht variieren sollte. Verlässt ein Bogen den Druckspalt eines Druckwerks einer Bogenrotationsdruckmaschine, so wird der Bogen an seinem hinteren Ende vom Druckspalt geführt und an seinem vorderen Ende von einem Bogengreifer einer bogenführenden Transporttrommel gehalten. In dieser Lage ist der Druckbogen somit an zwei gegenüber liegenden Seiten gehalten und gut stabilisiert, so dass er durch die Abtastvorrichtung zuverlässig vermessen werden kann.

Des weiteren ist vorgesehen, dass eine mit dem Rechner verbundene Kompensationseinrichtung vorhanden ist, welche den Einfluss von auf den Bedruckstoff fallendem Licht kompensiert. Um eine aussagekräftige Messung zu erhalten, spielt die Beleuchtung des Bedruckstoffes eine wichtige Rolle. Bei veränderter Beleuchtung des Bedruckstoffes fallen bei gleichem Bedruckstoff geänderte Messwerte an, was eine gute Reproduzierbarkeit des Messvorgangs verhindert. Es ist daher erforderlich, eine Umgebung zu schaffen, welche diese Reproduzierbarkeit gewährleistet. Aus diesem Grund ist der Einfall von sich veränderndem Licht auf den Bedruckstoff während des Messvorgangs zu verhindern. Dies kann dadurch geschehen, dass die Messvorrichtung und der Messbogen während des Messvorganges gegen die Einstreuung von Fremdlicht abgeschirmt wird. Es kann allerdings sein, dass in der Druckmaschine selbst Lichtquellen vorhanden sind, welche zeitlich gesehen schwanken. Dies kann z. B. die Lampe eines angeschlossenen UV-Trockners sein, welcher in das letzte Druckwerk einer Bogenrotationsdruckmaschine einstrahlt und eine dort angebrachte Abtasteinrichtung beeinträchtigen könnte. In diesem Fall kann der Einfluss einer solchen Fremdlichtquelle durch einen Sensor erfasst werden, welcher die Fremdlichtquelle ausmisst und entsprechende Werte an den Rechner der Druckmaschine sendet. Dieser kompensiert dann die ermittelten Messwerte der Abtasteinrichtung mittels der durch den Sensor erfassten Fremdlichtwerte, um so die Fremdlichteinwirkung herauszurechnen.

Es hat sich als vorteilhaft erwiesen, dass die Abtasteinrichtung auch zur Registermessung, Positionserkennung von Registermarken und Druckkontrollstreifen sowie zur Ermittlung der Art des Bedruckstoffes geeignet ist. Insbesondere die Positionserkennung von Registermarken aber auch die Positionsermittlung von Druckkontrollstreifen während der Farbmessung ist ein wichtiges Detail, da eine Registermessung und eine Farbmessung nur dann zuverlässig funktionieren, wenn die Lage der Registermarken oder des Druckkontrollstreifens zunächst zuverlässig detektiert wurde. Aus diesem Grund sollte die Abtasteinrichtung zumindest einen Sensor zur Positionserfassung von Registermarken und/oder Druckkontrollstreifen enthalten, um dann die auf dem Bedruckstoff vorhanden Muster einer solchen Marke zur Messung auswerten zu können. Zudem kann ein Glanzsensor zur Erfassung der Qualität der Oberfläche des Bedruckstoffs vorhanden sein, da auch die Beschaffenheit der Oberfläche ein wichtiger Parameter zur Steuerung des Druckprozesses ist, welcher bei der Einstellung bekannt sein sollte. Alle diese Sensoren können einzeln aufgebaut sein, sie können aber auch in beliebiger Kombination als ein einziger oder mehrere Kombisensoren ausgeführt sein.

Als Ergänzung zu den genannten Ausführungsformen kann vorgesehen sein, dass die Abtasteinrichtung in oder nach dem in Bedruckstofftransportrichtung gesehen letzten Druckwerk der Druckmaschine eingebaut ist. Dieser Einbauort bietet den großen Vorteil, dass im letzten Druckwerk bereits alle Farben auf dem Bedruckstoff aufgebracht sind und somit die Gesamtqualität des Bedruckstoffes erfasst werden kann. Da die Gesamtqualität des Bedruckstoffes letztlich ausschlaggebend ist, da nur sie zuverlässig mit der Druckvorlage zu vergleichen ist, erweist sich der Einbauort der Abtasteinrichtung im oder nach dem letzten Druckwerk als besonders vorteilhaft.

Des weiteren erweist es sich als vorteilhaft, dass die Druckmaschine eine Bogenwendeeinrichtung aufweist und dass wenigstens eine Abtasteinrichtung vor der Bogenwendeeinrichtung und eine Abtasteinrichtung nach der Bogenwendeeinrichtung angeordnet ist. Bei Bogendruckmaschinen mit Schön- und Widerdruckeinrichtung wird der Bogen wenigstens einmal während des Druckvorgangs gewendet, so dass hier beide Seiten eines Bedruckstoffes zur Qualitätskontrolle begutachtet werden müssen. Aus diesem Grund ist es sinnvoll, in einer Bogendruckmaschine mit Schön- und Widerdruckeinrichtung eine Abtasteinrichtung vor der Bogenwendeeinrichtung anzubringen und eine weitere Abtasteinrichtung nach der Bogenwendeeinrichtung. Um auch hier die Gesamtqualität des Bedruckstoffs erfassen zu können, sollte die erste Abtasteinrichtung zwischen dem letzten Druckwerk vor der Wendung und der Bogenwendeeinrichtung selbst angebracht sein und die zweite Abtasteinrichtung im oder nach dem letzten Druckwerk der Maschine. So ist sichergestellt, dass sowohl auf der Vorderseite als auch auf der Rückseite des Bedruckstoffes der Zustand erfasst wird, wenn alle Farben bzw. Lacke oder sonstige Beschichtungen auf der jeweiligen Seite des Bedruckstoffes aufgebracht sind.

Zweckmäßiger Weise ist vorgesehen, dass die Abtasteinrichtung die Form eines Messbalkens aufweist. Beim Einsatz einer Abtasteinrichtung in Bogenrotationsdruckmaschinen nahe des Druckspaltes ergibt sich vor allen Dingen ein Platzproblem. Aus diesem Grund muss die Abtasteinrichtung einen möglichst geringen Platzbedarf beanspruchen, was durch die Ausformung als Messbalken erreicht werden kann, welcher sich über die gesamte Breite eines Bedruckstoffes erstreckt. Somit erstreckt sich der Messbalken parallel zu den Achsen der Druckzylinder und Transportzylinder und kann auf Grund seines geringes Querschnitts unmittelbar am Druckspalt des Druckwerks montiert werden. Der Querschnitt des Messbalkens sollte also möglichst klein sein bzw. in seiner Form an die Platzverhältnisse angepasst werden, z.B. indem sich der Querschnitt zum Druckspalt hin verjüngt

Des weiteren ist vorgesehen, dass der Messbalken in seiner Längsrichtung verschiebbar gelagert ist. Über die gesamte Breite eines Bedruckstoffes verteilen sich üblicherweise mehrere Farbzonen, wobei prinzipiell jede Farbzone zur zuverlässigen Qualitätskontrolle ausgewertet werden muss. Wenn man nicht für jede Farbzone eine separaten Sensor im Messbalken zur Erfassung installieren möchte, ist es erforderlich, den Messbalken in seiner Längsrichtung verschiebbar zu machen. Dadurch können die Sensoren von einer Farbzone zu einer anderen versetzt werden, so dass auch mit relativ wenigen Messsensoren sämtliche Farbzonen über die gesamte Breite eines Bedruckstoffes hinweg erfasst werden können. Da die Messung automatisch ablaufen sollte, verfügt der Messbalken über einen Antriebsmotor, welcher denselben in seiner Längsrichtung verschiebbar antreibt.

Eine weitere vorteilhafte Ausgestaltung der Erfindung zeichnet sich dadurch aus, dass die Abtasteinrichtung drehbar gelagert und/oder austauschbar und für den Einsatz in weiteren Druckwerken geeignet ist. Da die Abtasteinrichtung nahe am Druckspalt angeordnet ist, besteht eine hohe Verschmutzungsgefahr, denn die auf dem Bedruckstoff aufgebrachten Farben und Lacke sind kurz nach dem Verlassen des Druckspaltes noch feucht und können demzufolge Spuren an der nahe dem Druckspalt angebrachten Abtasteinrichtung hinterlassen. Um die Abtasteinrichtung einfach reinigen zu können, sollte diese entweder leicht entnehmbar oder zumindest drehbar gelagert sein, so dass das Wartungspersonal oder der Drucker leicht auf die dem Bedruckstoff zugewandte Seite der Abtasteinrichtung zugreifen können. Wenn die Abtasteinrichtung entnehmbar ist, kann sie zudem z. B. bei einer Bogenrotationsdruckmaschine für Schon- und Widerdruck, welche zwei Abtasteinrichtungen aufweist, gegen eine andere Abtasteinrichtung ausgetauscht werden. So lässt sich z. B. überprüfen, ob die Abtasteinrichtungen noch korrekt funktionieren, oder ob eine Abtasteinrichtung einen Fehler aufweist. Außerdem können die Messbalken in vorgelagerte Druckwerke versetzt werden, wenn mit weniger Farben gedruckt werden soll oder der Einbauort für andere Anwendungen wie ein austauschbares Lackwerk im letzten Druckwerk gewechselt wird.

Es hat sich in der Praxis als besonders vorteilhaft erwiesen, dass der Messbalken die Form eines in Richtung des Bedruckstoffes offenen U-Profils aufweist und im Inneren des U-Profils wenigstens einen beweglichen Messwagen aufnimmt. Bei einer solchen Konstruktion des Messbalkens muss nicht der Messbalken selbst verschiebbar ausgerührt sein, sondern die Verschiebebewegung über die gesamte Breite des Bedruckstoffes wird durch den im Messbalken befindlichen beweglichen Wagen ausgeführt. Dazu wird der Wagen von einem Motor vorzugsweise einem elektrischen Linearmotor angetrieben, welcher eine präzise und schnelle Bewegung des Wagens im Messbalken ermöglicht. Der Motor kann den Wagen während des Messens kontinuierlich oder im Schrittbetrieb antreiben. Im Schrittbetrieb steht der Wagen während der Messung, während im kontinuierlichen Betrieb sich der Wagen auch während des Messvorgangs bewegt. Es ist auch möglich, dass sich mehrere Messwagen im Messbalken befinden, von denen jeder ein oder mehrere Messköpfe trägt. Jeder Wagen wird dann von einem eigenen Motor angetrieben, so dass die Wagen unabhängig voneinander verfahrbar sind. Das U-Profil gibt dem Messbalken zugleich Stabilität und Steifigkeit, was die Genauigkeit bei der Erfassung der Messwerte auf der Bedruckstoffoberfläche verbessert. Außerdem schützt das U-Profil den Wagen gleichzeitig von drei Seiten gegen Umwelteinflüsse von außen.

Gemäß einer weiteren Ausgestaltung der Erfindung ist vorgesehen, dass der Messbalken wenigstens eine abnehmbare Seitenwand aufweist. Zu Wartungszwecken ist es unter Umständen erforderlich, den Wagen den Messbalken entnehmen zu können, um Zugriff auf einzelne Teile des Wagens zu bekommen. Zu diesem Zweck weist der Messbalken wenigstens an einem Ende eine abnehmbare Stirnwand auf, so dass der Wagen aus dem Messbalken problemlos seitlich entnommen werden kann. Die Stirnwand ist dazu z. B. mittels Schraubverbindung, Steckverbindung oder Klemmverbindungen leicht annehmbar ausgestaltet.

Es ist außerdem vorgesehen, dass der Wagen ein oder mehrere Messmodule aufweist. Wie beim längsverschiebbaren Messbalken ist es auch beim beweglichen Wagen nicht erforderlich, dass für jede Farbzone des auszumessenden Bedruckstoffes ein Messkopf bzw. Messmodul vorhanden ist. Es reicht vielmehr aus, dass mit den im Wagen vorhandenen Messköpfen alle Farbzonen über die gesamte Breite eines Bedruckstoffes hinweg nacheinander angefahren werden können.

In einer erweiterten Ausgestaltung der Erfindung wird daran gedacht, dass der Messwagen ein oder mehrere Registersensoren aufweist. Neben den Messmodulen zur spektralen, densitometrischen oder farblichen Messung der Bedruckstoffoberfläche können in dem Wagen zusätzlich Registersensoren untergebracht sein, welche zum einen zunächst die Lage einer Registermarke auf dem Bedruckstoff erfassen können und zum anderen die Registermarken selbst entsprechend auswerten können, um so Registerfehler korrigieren zu können. Da die Registersensoren im beweglichen Wagen untergebracht sind, ist es möglich durch seitliche Bewegungen des Wagens auch die Registersensoren entsprechend zu positionieren und damit auf die auf dem Bedruckstoff vorliegenden Registermarken auszurichten.

Vorteilhafter Weise zeichnet sich die Erfindung weiterhin dadurch aus, dass der Messwagen wenigstens eine Beleuchtungseinrichtung aufweist. Neben der Problematik mit Fremdlichtquellen ist es für die zuverlässige Vermessung erforderlich, dass der Bedruckstoff mit einer genormten Beleuchtungsquelle ausgeleuchtet wird. Durch die Normung ist sichergestellt, dass jeder Bedruckstoff bei jeder Messung unter den gleichen Beleuchtungsbedingungen ausgewertet wird. Um diese genormten Bedingungen sicherzustellen, ist es erforderlich, dass weiterhin bei jeder Messung die Messköpfe und die Beleuchtungseinrichtung die gleiche Anordnung aufweisen. Es ist daher von Vorteil, wenn sowohl die Beleuchtungseinrichtung als auch die Messköpfe im Wagen untergebracht sind, da dann die Beleuchtungseinrichtung und die Messköpfe nicht zueinander beweglich ausgestaltet sind und somit immer konstante geometrische Bedingungen vorliegen. Messköpfe und Beleuchtungseinrichtungen können zu einem Messmodul zusammengefasst werden, wobei sich die Lichtquelle selbst außerhalb des Messmoduls befinden kann. Die Lichtquelle ist vorzugsweise als Blitzlampe ausgeführt, welche genau zu den Messzeitpunkten den Bedruckstoff beleuchtet. Damit kann wie bei einem Stroboskop die Bewegung des Druckbogens bezüglich des Messmoduls eingefroren werden, gleichzeitig wird der Messort mit hoher Intensität beleuenten. Das Auslösen der Blitzlampe wird über den Steuerungsrechner der Druckmaschine mit der Bewegung der Messbogen synchronisiert, oder es wird eine zusätzliche Erkennungsmarke in definierter Entfernung vor dem Druckkontrollstreifen aufgebracht, welche von einem Sensor abgetastet wird und dann die Blitzlampe ausgelöst. Da die Leistung einer Lampe über die gesamte Lebensdauer gesehen abnimmt, ist es sinnvoll die Lampe so zu dimensionieren, dass sie am Anfang nur mit reduzierter Leistung z.B. mit 50 % ihrer Maximalleistung arbeiten muss, um ausreichend Licht zu erzeugen. Mit zunehmender Alterung wird die Leistung der Lampe bis zum Maximum gesteuert, so dass die Lichtleistung über die gesamte Lebensdauer gesehen konstant bleibt.

Es ist des weiteren von Vorteil, dass die Abtasteinrichtung in einer Bogenrotationsdruckmaschine zugleich als bogenführenden Element ausgestaltet ist. Da bei Bogenrotationsdruckmaschinen im Gegensatz zu Rollenrotationsdruckmaschinen jeder Bogen einzeln geführt werden muss, sind im Bogentransportweg einer Bogenrotationsdruckmaschine an vielen Stellen Bogenleitbleche und Saug-/Blastuftdüsen zur Bogenführung angebracht, welche neben den Bogengreifern und Führungen im Druckspalt einen sicheren und zuverlässigen Transport durch den Druckpfad ermöglichen. Da die Abtasteinrichtung sehr nahe an der Bogenoberfläche angebracht ist, besteht hier immer die Gefahr, dass der Bogen mit der Abtasteinrichtung in Berührung kommen kann. Aus diesem Grund kann die Abtasteinrichtung gleichzeitig als Bogenleitblech ausgeformt sein, da dann der Abstand zwischen Bedruckstoff und Abtasteinrichtung einfacher zu kontrollieren ist. Es können z. B. auch quer zur Bogentransportrichtung in der Abtasteinrichtung noch Saug- bzw. Blasluftdüsen integriert sein, mit welchen der Abstand des Bedruckstoffes zur Abtasteinrichtung steuerbar ist. Auf jeden Fall ist eine genaue Bogenführung im Bereich der Abtasteinrichtung von großer Wichtigkeit für exakte Messergebnisse und damit eine zuverlässige Qualitätskontrolle der Bogen.

Ein weiterer Vorteil ergibt sich dadurch, dass mittels der Abtasteinrichtung die Position eines Druckkontrollstreifens erkennbar und der Messzeitpunkt füreine Farbmessung erfassbar ist. Die Farbzonen eines Bedruckstoffes werden an Hand eines quer oder längs zur Bogentransportrichtung auf dem Bedruckstoff aufgedruckten Druckkontrollstreifens ausgewertet, welcher ebenfalls während des Druckvorgangs eingefärbt wird und somit eine Qualitätsbeurteilung der Färbung des Bedruckstoffes erlaubt. Auch dieser Druckkontrollstreifen muss ähnlich einer Registermarke vor seiner Auswertung zunächst in Bezug auf seine Position erfasst werden, zudem muss die Messung genau dann erfolgen, wenn der Druckkontrollstreifen unter der Abtasteinrichtung liegt. Zu diesem Zweck verfügt die Abtasteinrichtung über einen Sensor, welcher die Position des Druckkontrollstreifens ermittelt und zugleich ein Triggersignal an die Auswerteelektronik der Abtasteinrichtung sendet, wenn der Druckkontrollstreifen zur Messung bereit vorliegt. Die Position des Druckkontrollstreifens und auch die einer Registermarke kann dadurch leichter erfassbar gestaltet werden, indem vor dem Druckkontrollstreifen und der Registermarke ein entsprechend kodiertes Lagemessfeld angebracht ist, welches Informationen über die Lage des Druckkontrollstreifens oder der Registermarke enthält und welches durch einen Sensor der Abtasteinrichtung erfasst wird. Dann kann die Abtasteinrichtung in der Anlaufphase des Druckvorgangs rechtzeitig mittels motorischer Verstellung in eine entsprechende Position gebracht werden, um den Druckkontrollstreifen oder die Registermarke zuverlässig erkennen zu können, wenn es Abweichungen gibt. Es reicht jedoch normaler Weise aus, das Lagemessfeld beim Andruck und später in größeren Abständen auszuwerten, da sich die Lage des Druckkontrollstreifens bezüglich der Abtasteinrichtung während des Fortdrucks nicht mehr ändern sollte, hier ist also lediglich eine Kontrolle angebracht.

Für ein vollautomatisches Inline-Messsystem ist es unumgänglich, dass die Abtasteinrichtung an einen Rechner anschließbar ist. Die Daten der Messköpfe und weiteren Sensoren können so direkt an den Rechner der Druckmaschine übermittelt werden, welcher diese Daten bei der Steuerung der Druckmaschine verarbeiten kann. Zudem ist es möglich in der Abtasteinrichtung selbst auf einen eigenen Rechner zu verzichten, was Baugröße spart und so eine entsprechend kleine Abtasteinrichtung ermöglicht. Falls in der Abtasteinrichtung dennoch genügend Platz vorhanden ist, kann selbstverständlich auch in dieser eine Recheneinrichtung vorhanden sein.

Zur Erhöhung der Genauigkeit der Messergebnisse ist vorgesehen, dass die Abtasteinrichtung ein oder mehrere Messmodule aufweist und in dem Rechner Kalibrierungsdaten für jedes Messmodul abspeicherbar sind. Um eine hinreichend genaue Messung zu ermöglichen, müssen die Messköpfe in den Messmodulen ab und an neu kalibriert werden. Die beim Kalibrierungsvorgang ermittelten Daten werden dann für nachfolgende Messungen in einem Rechner abgespeichert, wobei dies der Rechner der Druckmaschine sein kann oder ein Rechner mit einer Speichereinrichtung in der Abtasteinrichtung selbst.

Es erweist sich weiterhin als vorteilhaft, dass die Abtasteinrichtung über eine Ethernetschnittstelle oder eine andere standardisierte Computerschnittstelle verfügt. Bei der Verwendung standardisierter Computerschnittstellen kann auf die Architektur handelsüblicher Rechner zurückgegriffen werden, und es kann auch auf sämtliche Möglichkeiten solcher standardisierter Computerschnittstellen zugegriffen werden. Insbesondere können Programm-Updates übertragen werden und es kann die Abtasteinrichtung unmittelbar an die Schnittstellen eines PC oder Laptops angeschlossen werden, was bei proprietären Schnittstellen ohne Adapter nicht möglich ist. Des weiteren können die bei standardisierten Computerschnittstellen verwendeten Protokolle zur sicheren Datenübertragung verwendet werden, ohne dass eine Neuentwicklung speziell für diesen Zweck erforderlich ist.

Es ist des weiteren möglich, dass die Beleuchtungseinrichtung mit Lichtleitern versehen ist, welche an einem Ende einzelnen Messmodulen zugeordnet sind und am anderen Ende in einem durchmischten Bündel wenigstens einer Lichtquelle zugeordnet sind. Da in der Abtasteinrichtung und insbesondere in der Ausführungsform mit einem Messwagen, welcher sich im Inneren eines Messbalkens befindet, nur wenig Platz vorhanden ist, kann nicht für jedes Messmodul eine separate Lichtquelle verwendet werden. Mittels Lichtleitern ist es aber möglich, dass Licht einer Lichtquelle oder mehrerer Lichtquellen mehreren Messmodulen zuzuführen, wobei die Lichtleiter an dem der Lichtquelle oder den Lichtquellen zugewandten Ende vorteilhafter Weise durchmischt sind, um eine Gleichverteilung des Lichts auf alle Lichtleiter sicherzustellen. Die Lichtleiter können z. B. flexible Glasfasern sein, welche sich den beengten Platzverhältnissen in der Abtasteinrichtung problemlos anpassen lassen. Weil diese Lichtleiter sehr verlustarm sind, sind diese zur Ausleuchtung der Messbereiche für die Messköpfe hervorragend geeignet. Die Beschränkung auf eine Lichtquelle ist auch aus thermischen Gründen günstig, da ansonsten das Innere des Messbalkens stark aufgeheizt wird und dann entsprechende Kühlvorrichtungen vorzusehen sind.

Zur Verbesserung der Messgenauigkeit ist außerdem vorgesehen, dass in der Abtasteinrichtung ein oder mehrere Temperatursensoren vorhanden sind. Mittels solcher Temperatursensoren können zum einen die aktuellen Messbedingungen genau erfasst werden, und es kann zum anderen die thermische Gesundheit des Systems überwacht werden. So können die Messungen unterbrochen werden bzw. die Abtasteinrichtung abgeschaltet werden, wenn eine Temperatur gemessen wird, welche sich außerhalb eines zulässigen Bereiches befindet. In diesem Fall kann zusätzlich dem Bedienpersonal der Druckmaschine ein Alarmsignal angezeigt werden, um dieses zur Überprüfung der Abtasteinrichtung aufzufordern. Neben Temperatursensoren können außerdem auch Feuchtigkeitssensoren in der Abtasteinrichtung vorhanden sein, mit denen die Luftfeuchtigkeit im Druckwerk erfasst werden kann. Ein Temperaturanstieg kann aber auch mittels Registersensoren am Messbalken festgestellt werden. Wenn sich der Messbalken temperaturbedingt ausdehnt, so verändert sich auch der Abstand zwischen den Registersensoren, insbesondere den jeweils am äußeren Ende des Balkens gelegenen Sensoren. Da sich der Abstand der Registermarken auf den Bogen aber nicht ändert, müssen die Registersensoren am Messwagen an einen anderen Ort verfahren werden, um die Marken zu erfassen. Diese Ortsveränderung wird von der Messelektronik erfasst und ausgewertet, wodurch die Längenausdehnung des Messbalkens berechnet werden kann. Daraus wiederum lässt sich über den Wärmeausdehnungskoeffizienten des Balkenmaterials die Temperatur bestimmen.

Es sind des weiteren mehrere Anordnungen der Elektronik zur Verarbeitung der Signale der Messköpfe vorgesehen, welche jeweils unterschiedliche Vorteile bieten. So kann zum einen die Elektronik zur Verarbeitung der Signale der Messköpfe außerhalb des Messbalkens untergebracht sein. In diesem Fall ist die Elektronik vor thermischen Belastungen durch die Lichtquelle im Inneren des Messbalkens geschützt, und es wird der Platzbedarf im Messbalken reduziert, da sich die Elektronik außerhalb befindet. Selbstverständlich kann sich die Elektronik zur Verarbeitung der Signale der Messköpfe auch innerhalb des Messbalkens befinden. Dies erfordert zwar mehr Platzbedarf innerhalb des Messbalkens, erleichtert dafür den Transport der Messdaten von der Abtasteinrichtung zum Rechner der Druckmaschine, da die Signale der Messköpfe schon innerhalb des Messbalkens in ein für die Übertragung zum Rechner geeignetes Datenformat aufbereitet werden können.

Auch für die Anordnung der Lichtquelle gibt es mehrere Möglichkeiten. Befindet sich die Lichtquelle außerhalb des Messbalkens, so reduziert auch diese Anordnung die Baugröße des Messbalkens. Zudem wird eine Erwärmung des Messbalkens durch die Lichtquelle vermieden. Des weiteren kann sich die Lichtquelle auch im Inneren des Messbalkens befinden, aber außerhalb des Messwagens des Messbalkens. Da sich auf dem Wagen die empfindlichen Messköpfe befinden, können diese so vor der thermischen Abstrahlung der Lichtquelle geschützt werden. Nichtsdestotrotz ist es aber auch möglich, die Lichtquelle im Wagen des Messbalkens anzuordnen. Der große Vorteil hierbei ist, dass die Lichtquelle mit dem Wagen mit bewegt wird und so keine beweglichen Lichtleiter zwischen Lichtquelle und Wagen erforderlich sind, wie dies in den beiden anderen Fällen erforderlich ist. Da bewegliche Lichtleiter letztendlich einem Verschleiß unterliegen, verbessert die Anordnung mit der Lichtquelle im Wagen die Lebensdauer des gesamten Systems erheblich. Die thermischen Probleme der Lichtquelle müssen dann durch eine entsprechende Isolation derselben gegenüber der Messelektronik gelöst werden. Dies erfordert einen erhöhten Platzbedarf, ist aber mit den derzeit bekannten Mitteln zu realisieren.

Es ist des weiteren vorgesehen, dass sich die Lichtquelle außerhalb des beweglichen Messwagens befindet, dass parallel aufeinander ausgerichtete am beweglichen Wagen befindliche Stirnflächen eines ersten Lichtleiterbündels und am Messbalken entsprechende Stirnflächen eines zweiten Lichtleiterbündels vorhanden sind und der Zwischenraum zwischen den beiden Lichtleiterbündeln durch optische Mittel überbrückbar ist. Neben der Möglichkeit die Lichtquelle mit dem beweglichen Wagen über Verschleiß behaftete Lichtleiter zu koppeln, bietet diese Anordnung den Vorteil, dass hier auf diese Verschleißteile verzichtet werden kann. Die Lichtleiterbündel liegen sich hier an ihren Stirnseiten gegenüber, wobei der Abstand zwischen den Stirnseiten der Lichtleiterbündel in Abhängigkeit der Position des beweglichen Wagens variieren kann. Der unterschiedliche Abstand zwischen den Lichtleitern wird dann mittels einer sogenannten optischen Posaune, d. h. einem verspiegelten Rohr überbrückt. Da sich der Wagen nur in einem relativ kleinen Bereich bewegt, ist eine solche Lösung ohne größere Probleme realisierbar, wobei bei Bedarf noch eine geeignete Linsenoptik zwischen den Lichtleiterbündeln zum Einsatz kommen kann.

Es ist zu dem vorgesehen, dass die Abtasteinrichtung mit einer Kühlvorrichtung versehen ist. Insbesondere bei der Anordnung mit im Wagen befindlicher Lichtquelle ist es erforderlich, die gesamte Abtasteinrichtung zu kühlen, da sonst zum einen die Messergebnisse verfälscht werden und zum anderen die Temperaturempfindlichen Messkomponenten der Abtasteinrichtung in Mitleidenschaft gezogen werden. Eine solche Kühlvorrichtung muss nicht notwendigerweise im Wagen selbst untergebracht sein, sondern kann z. B. im Messbalken selbst angeordnet sein, indem dieser eine Doppelwand aufweist, in der Kühlflüssigkeit zirkulieren kann. Selbstverständlich können auch separate Kühlkanäle am Messbalken angebracht sein.

Vorteilhafter Weise ist vorgesehen, dass die Abtasteinrichtung mittels einer durchsichtigen Abdekkung gegen Verschmutzung geschützt ist. Da die Messköpfe der Abtasteinrichtung aufgrund des geringen Abstands zum Bedruckstoff mit diesem in Kontakt kommen und durch die druckfrische Farbe verschmiert werden können, ist es erforderlich, die Abtasteinrichtung dagegen zu schützen. Mittels einer durchsichtigen Abdeckung ist ein solcher Schutz möglich, wobei die Messköpfe weiterhin freie Sicht auf den Bedruckstoff haben. Um ein Verkratzen der Abdeckung zu verhindern hat es sich als vorteilhaft erwiesen, die durchsichtige Abdeckung aus gehärtetem Glas herzustellen.

Um ein zuverlässiges Funktionieren der Inline-Messeinrichtung sicherzustellen, ist es von Vorteil, dass die Abtasteinrichtung eine Vorrichtung zur Kontrolle des Zustands der durchsichtigen Abdeckung enthält. Da die durchsichtige Abdeckung durch Kontakt mit frisch bedruckten Bedruckstoffen mit der Zeit mehr und mehr verschmiert wird und damit die Qualität der Messergebnisse zwangsläufig abnimmt, ist eine Kontrollvorrichtung empfehlenswert, welche diese Verschmutzungen erfasst und ab einem bestimmten nicht mehr zulässigen Verschmutzungsgrad ein Alarmsignal an den Rechner der Druckmaschine sendet.

Vorteilhafter Weise ist außerdem vorgesehen, dass die durchsichtige Abdeckung auswechselbar ist. Um ein Auswechseln des gesamten Messbalkens zu vermeiden, ist die durchsichtige Abdeckung separat auswechselbar ausgestaltet, wobei diese am Messbalken entweder durch Schraubverbindung, Klemm- oder Steckverbindung gesichert werden kann. Auf diese Art und Weise ist es einfach möglich, die verschmutzte Abdeckung auszuwechseln und eine saubere Abdeckung einzusetzen, so dass die Abdeckung nicht in der Druckmaschine gesäubert werden muss.

Es ist außerdem vorgesehen, dass die Messmodule mit wenigstens einem beweglichen mechanischen Verschluss versehen sind. Dieser Verschluss muss nicht unmittelbar an den Messmodulen angebracht sein, sondern er kann so ausgeführt sein, dass die gesamte Abtasteinrichtung mit den Messköpfen gegenüber Umwelteinflüssen verschlossen wird. Zu diesem Zweck kann unterhalb der Messköpfe bzw. Messmodule ein Verschluss eingefahren werden, welcher somit die Messköpfe und den gesamten Messbalken gegen Verschmutzung schützt. Dieser Verschluss wird nur dann geöffnet, wenn tatsächlich Messungen erfolgen. Auf diese Art und Weise wird eine Verschmutzung des Messbalkens auf ein Mindestmaß reduziert. Die mechanische Verschlusseinrichtung kann dabei über ein oder mehrere Antriebe in Abhängigkeit des Betriebszustandes der Druckmaschine ansteuerbar sein. Die Bewegung des Verschlusses kann aber auch durch die Bewegung des Messwagens oder Messbalkens selbst ausgelöst oder bewirkt werden, wenn sich dieser in Messposition bewegt. Zusätzlich kann der Messbalken, wenn er nicht gebraucht wird, in eine Position verfahren werden, in der er vor Umwelteinflüssen geschützt ist. Zu diesem Zweck ist eine Vorrichtung vorhanden, welche den Messbalken als Ganzes bewegen kann.

Weiterhin ist vorgesehen, dass die Abtasteinrichtung ein abgedichtetes Gehäuse umfasst. Um das Eindringen von Schmutz und Staub, insbesondere feinen Farbpartikeln, in das Innere der Abtasteinrichtung zu verhindern, wird diese mit einem Gehäuse versehen, welches z.B. in IP 65 Technik ausgeführt ist, um eine Beschädigung der in der Abtasteinrichtung angebrachten empfindlichen Messsensoren zu verhindern. Wenn der Messbalken U-förmig ausgestaltet ist, genügt es, die durchsichtige Abdeckung der Messköpfe und seitlichen Stirnwände des Messbalkens entsprechend abzudichten, um das Innere des Messbalkens vor Umwelteinflüssen zu schützen. An Stelle der Abdichtung des Messbalkens gegen äußeren Einflüssen kann auch ein durch einen kleinen Kompressor erzeugter Überdruck eingesetzt werden, so dass auch dann kein Schmutz eindringt, wenn der Balken ein Leck oder Öffnungen aufweist.

Wenn der Messbalken nach unten offen ist, kann der Messwagen auch dadurch vor Schmutz geschützt werden, dass in den Messbalken Luft eingeblasen wird, welche den Messwagen umströmt und den Balken an seiner offenen Unterseite verlässt. Durch den an der Unterseite des Balkens nach außen gerichteten Luftstrom wird ein Eindringen von Schmutzpartikeln in das Innere des Balkens verhindert. Gleichzeitig drückt der Luftstrom als bogenführendes Element den Bedruckstoff vom Messbalken weg und verhindert so einen Kontakt des Bedruckstoffs mit dem Messbalken.

Zusätzlich ist vorgesehen, dass ein oder mehrere Teile der Abtasteinrichtung mit schmutzabstoßenden Oberflächen versehen sind. Wie schon erwähnt, gerät zumindest die dem Bedruckstoff zugewandte Seite der Abtasteinrichtung ab und an mit den feuchten Oberflächen des Bedruckstoffs in Kontakt und erleidet daher Verschmutzungen. Wenn diese Oberflächen schmutzabstoßend beschichtet sind, werden diese Verschmutzungen auch ohne Reinigungsverfahren weiter reduziert. Solche schmutzabstoßenden Oberflächen bestehen z. B. aus Teflon oder ORMOCER. Zugleich wird damit die spätere Reinigung der Oberflächen erleichtert.

Es ist außerdem beabsichtigt, dass Reinigungswerkzeuge vorgesehen sind, welche an die Form der zu reinigenden Teile der Abtasteinrichtung angepasst sind. Diese Reinigungswerkzeuge sind insbesondere an die Form der zu reinigenden Flächen angepasst, um so z. B. den Reinigungsvorgang der durchsichtigen Abdeckung zu erleichtern. Zugleich wird durch die speziell angepassten Reinigungswerkzeuge das Risiko vermindert, dass die Oberflächen der Abtasteinrichtung verkratzt werden. Insbesondere die durchsichtige Abdekkung muss vor Verkratzung bewahrt werden, da sonst Streulicht entstehen kann und zudem die Messköpfe irritiert werden können.

Es hat sich außerdem als vorteilhaft erwiesen, dass an der dem Bedruckstoff zugewandten Seite der durchsichtigen Abdeckung der Abrasteinrichtung Stege angeordnet sind. Diese Stege verhindern einen unmittelbaren Kontakt des Bedruckstoffes mit der durchsichtigen Abdeckung, da der Bedruckstoff nur mit den Stegen in Kontakt kommen kann und nicht mit der durchsichtigen Abdeckung selbst. Auf diese Weise wird die durchsichtige Abdeckung zuverlässig vor Verschmutzung geschützt und Reinigungsvorgänge so vermindert. Da die Stege in diesem Fall zwangsläufig im optischen Pfad der Messköpfe und der Beleuchtungseinrichtung stehen, sind entsprechende Vorkehrungen zu treffen. Wenn sich die Stege nahe an der Optik der Messköpfe und der Beleuchtungseinrichtung befinden, entsteht zwar eine Reduktion der Messintensität, diese kann jedoch durch entsprechende Kalibrierung korrigiert werden. Diese Kalibrierung muss entsprechend für jede Messposition der Abtasteinrichtung vorgenommen werden und ermöglicht dann eine zuverlässige Kompensation der von den Stegen verursachten Störungen. So findet an den Messstellen auf dem Bedruckstoff, deren Messergebnisse von den Stegen beeinflusst werden, Messungen auf Papierweiß statt. Damit lässt sich der Effekt durch die Stege durch Vergleiche der nachfolgenden Farbmessungen mit den Messungen auf Papierweiß herausrechnen. Die Beleuchtungseinrichtung wird so an die vorhandenen Stege angepasst bzw. der Effekt durch die Stege durch eine entsprechende Kalibrierung kompensiert.

Die vorliegende Erfindung wird nachfolgend anhand mehrerer Figuren näher beschrieben und erläutert. Es zeigen:
Fig. 1: den Messbalken im Druckwerk einer Bogendruckmaschine,
Fig. 2: eine Bogendruckmaschine für Schön- und Widerdruck,
Fig. 3: eine Innenansicht des Messbalkens,
Fig. 4: einen Querschnitt durch den Messbalken in Fig. 3,
Fig. 5: den Messbalken aus Fig. 3 in der Ansicht von unten,
Fig. 6: eine Lichtleiteranordnung im Messbalken,
Fig. 7a: eine Lichtleiteranordnung im Messbalken mit optischen Zwischenraum,

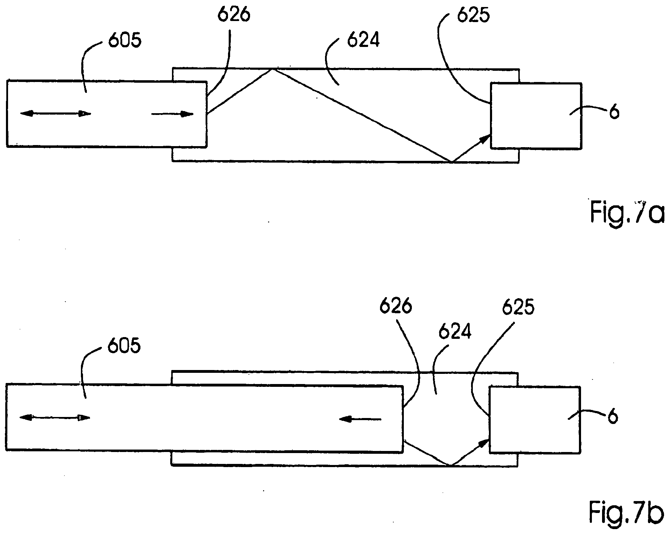

Fig. 7 b: die Lichtleiteranordnung aus Fig. 7a mit reduziertem optischen Zwischenraum,

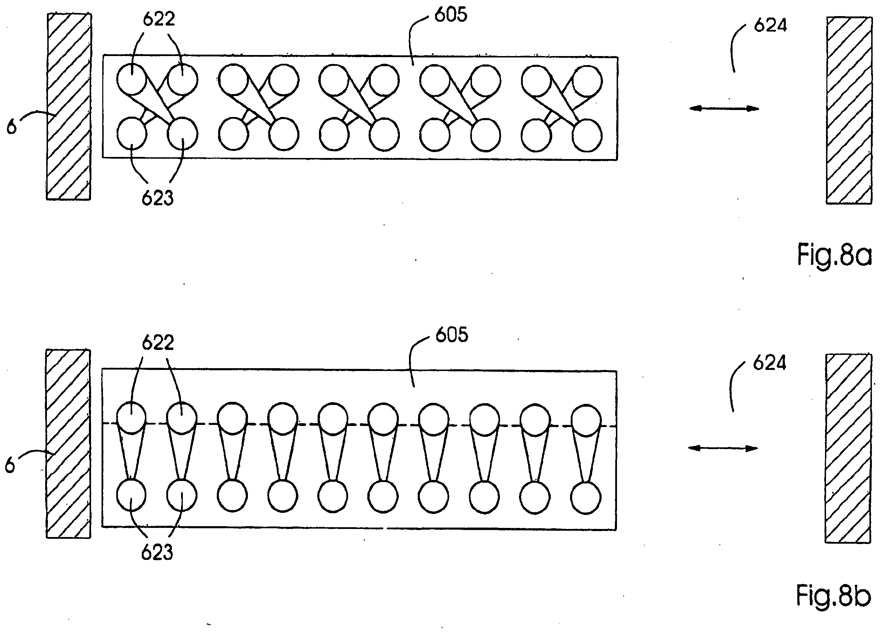

Fig. 8 a: eine Überkreuzanordnung von Messköpfen und Beleuchtungseinrichtungen und
Fig. 8 b: eine konventionelle Anordnung von Messköpfen und Beleuchtungseinrichtungen im Messbalken,

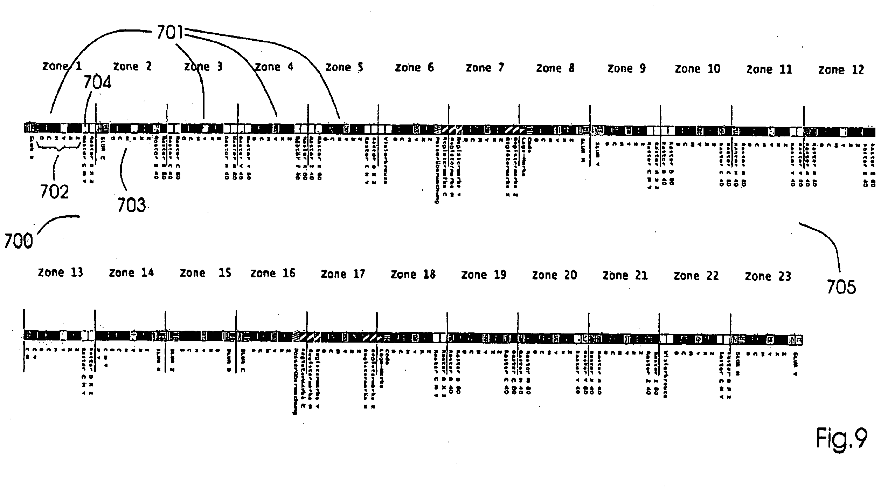

Fig. 9: einen Druckkontrollstreifen auf einem Bedruckstoff,

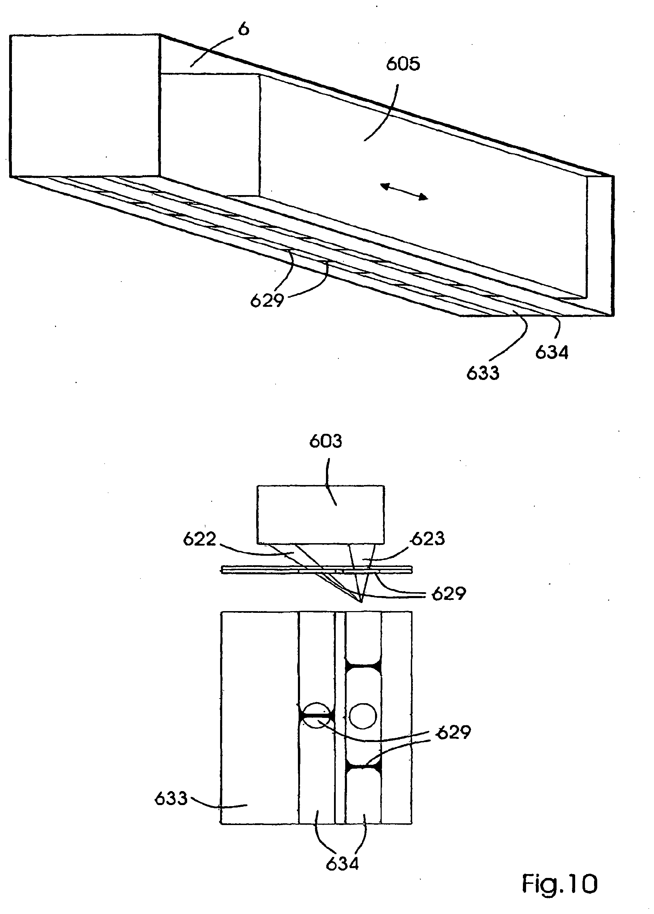

Fig. 10: einen Messbalken mit gläsernem Unterboden sowie einer als geschlitzte Bogenführung ausgebildeten Abdeckung,

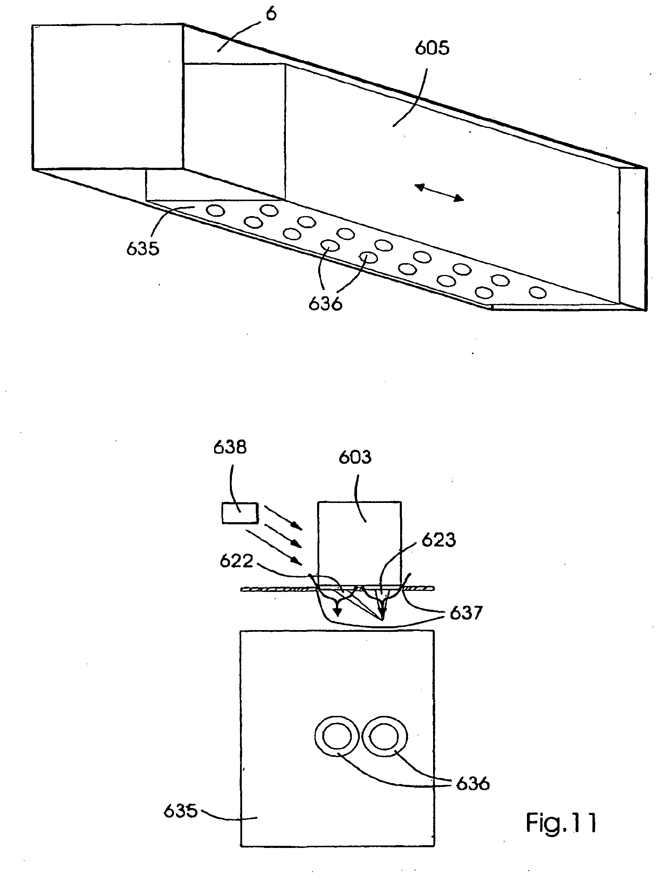

Fig. 11: einen offenen Messbalken mit einem abgeschlossenen Messwagen,

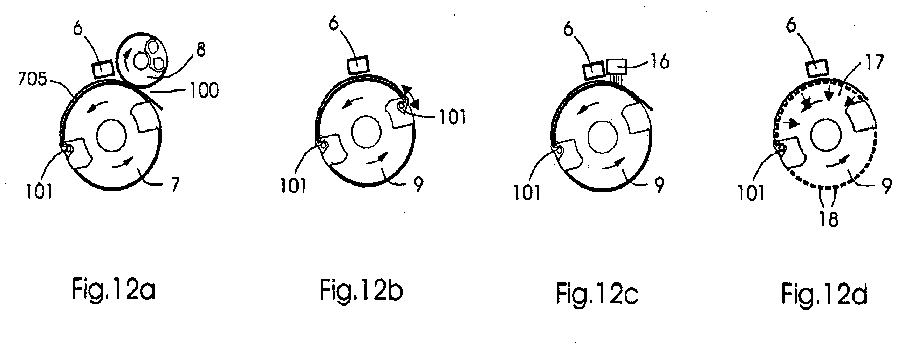

Fig. 12a: Bogen während des Messvorgangs gehalten durch Greifer und Druckspalt,
Fig. 12b: Bogen während des Messvorgangs gehalten durch zwei Greifer,
Fig. 12c: Bogen während des Messvorgangs gehalten durch Greifer und eine Blaseinrichtung,
Fig. 12d: Bogen während des Messvorgangs gehalten durch Unterdruck und

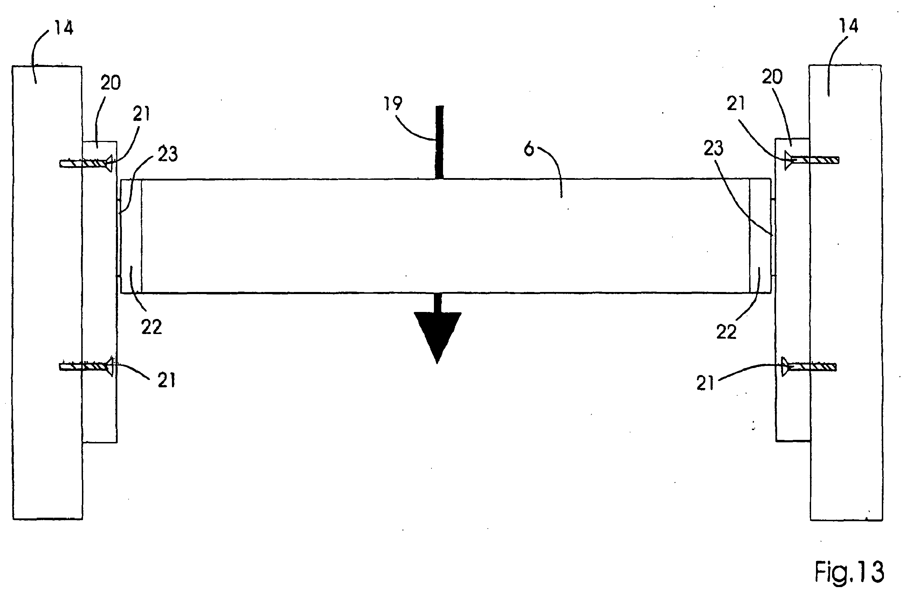

Fig. 13: Befestigung des Messbalkens im Druckwerk einer Druckmaschine.

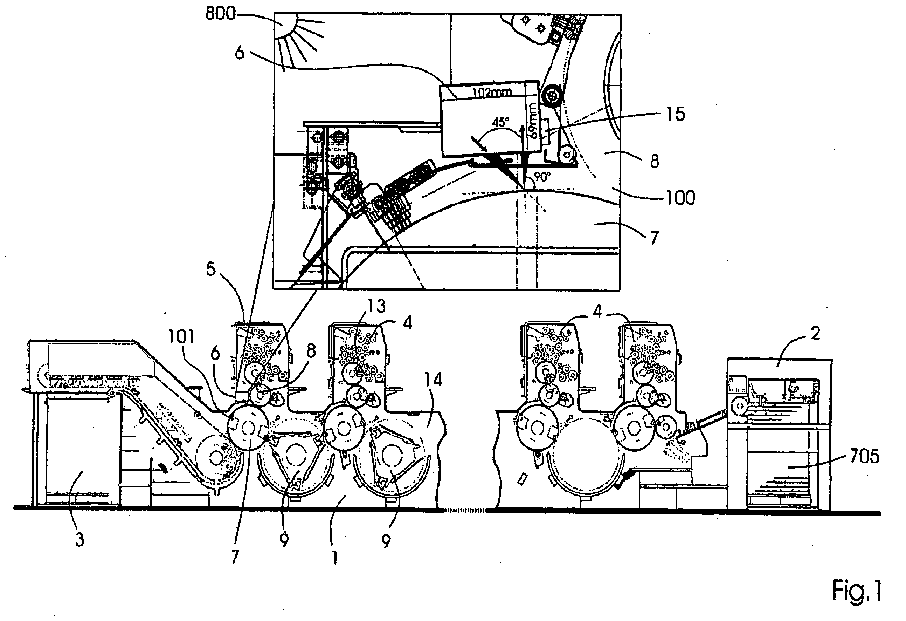

Fig. 1 zeigt eine Bogenrotationsdruckmaschine 1 mit einem Bogenanlegermodul 2 und einem Bogenauslegermodul 3 sowie vier dazwischen angeordneten Druckwerken 4, 5. Diese Ausgestaltung einer Bogenrotationsdruckmaschine 1 ist selbstverständlich nur beispielhaft zu verstehen, da die Anzahl der Druckwerke 4, 5 zwischen Bogenanleger 2 und Bogenausleger 3 für das Wesen der Erfindung keine Rolle spielt. Die Druckwerke 4, 5 sind über Transportzylinder 9 miteinander verbunden, so dass im Bogenausleger 2 gestapelte Druckbogen 705 durch die einzelnen Druckwerke 4, 5 hindurch zum Ausleger 3 gefördert und in den Druckwerken 4, 5 bedruckt werden können. Das letzte Druckwerk 5 in Bogenlaufrichtung gesehen unterscheidet sich von den anderen Druckwerken 4 dadurch, dass es einen Messbalken 6 als Abtasteinrichtung zur Begutachtung der Druckqualität von bedruckten Bogen aufweist. Der Messbalken 6 ist deshalb im letzten Druckwerk 5 untergebracht, da hier bereits alle im Druckvorgang aufgebrachten Farben auf dem Druckbogen 705 vorhanden sind und damit der entgültige Zustand des Druckbogens vorliegt. In diesem Zusammenhang ist der Pegriff Druckwerk 4, 5 weiter zu fassen, da selbstverständlich ein oder mehrere der Druckwerke 4, 5 auch Lackierwerke, Versiegelungswerke oder sonstige bogenverarbeitende Werke sein können. Auch wenn diese anderen Werke in der Druckmaschine 1 vorhanden sind, ist es sinnvoll, dass der Messbalken im letzten Werk 5 angebracht ist, um den Bogen 705 mit sämtlichen Lackschichten kontrollieren zu können. Sämtliche Druckwerke 4,5 weisen einen Gegendruckzylinder 7 und einen Gummituchzylinder 8 auf, welche den Druckspalt 100 eines Druckwerks 4, 5 bilden. Des weiteren ist jedes Druckwerk 4, 5 mit einem Farbwerk 13 ausgerüstet. Die Zylinder 7, 8 und das Farbwerk 13 sind in den Seitenwänden 14 der Druckmaschine 1 gelagert und werden über dort vorhandene Motoren und Getriebe angetrieben.

Der Druckspalt 100 zwischen den Druckzylindern 7, 8 ist in der Vergrößerung in Fig. 1 deutlicher zu sehen. Die Vergrößerung der Umgebung des Druckspaltes 100 im letzten Druckwerk 5 samt dem Messbalken 6 zeigt außerdem die ungefähren Größenverhältnisse des Querschnitts des Messbalkens 6 gegenüber den Durchmessern der Druckzylinder 7, 8. Auf dem Gegendruckzylinder 7 sind weiterhin Bogengreifer 101 angebracht, welche den Bogen 705 um den Gegendruckzylinder 7 führen, von dem Transportzylinder 9 entgegennehmen und an den Ausleger 3 übergeben. Während des Messvorgangs durch den Messbalken 6 wird der bedruckte Bogen 705 zum einen an seinem hinteren Ende durch den Druckspalt 100 gehalten und zum anderen an seinem vorderen Ende vom Bogengreifer 101 gehalten. Damit ist gewährleistet, dass sich der Bogen 705 während des Messvorgangs nur minimal bewegen kann, was für den Messvorgang insofern von Bedeutung ist, dass der Abstand zwischen Bogen 705 und Messbalken 6 während der Messung möglichst nicht variieren sollte. Die Abmessungen des Querschnitts des Messbalkens 6 betragen in Fig. 1 bei einer Druckmaschine 1 im 102 cm Bogenformat an seiner Stirnfläche 102 mm in der Breite und 69 mm in der Höhe. Des weiteren ist der Messbalken 6 leicht gegenüber der Horizontalen geneigt, so dass er parallel zur Oberfläche eines Bogens 705 verläuft, wenn dieser vom Bogengreifer 101 und dem Druckspalt 100 geführt wird. Am Messbalken 6 ist ein Sensor 15 befestigt, welcher aber auch in den Messbalken 6 integriert sein kann. Dieser Sensor 15 ist ein optischer Sensor, z.B. eine Kamera, welche Markierungen auf einem Drackbogen 705 erkennen kann. Außerdem kann der Sensor 15 dazu benutzt werden, Fremdlichtquellen 800 zu beobachten und den Messvorgang durch den Messbalken 6 auszulösen. Dazu ist der Sensor 15 mit der Messelektronik 201 und dem Rechner 200 der Druckmaschine1 vernetzt. So kann der Messvorgang durch den Sensor 15 derart gesteuert werden, dass nur dann gemessen wird, wenn kein Fremdlicht 800 auf die Messfläche oder direkt in die Abtasteinrichtung 6 fällt. Der Sensor 15 kann aus einem kombinierten Sensor oder aus mehreren separaten Sensoren bestehen. Es können auch mehrere Sensoren 15 über die gesamte Länge des Messbalkens 6 hinweg verteilt angebracht sein. Die Sensoren 15 können dabei auch in den Messbalken 6 integriert werden.

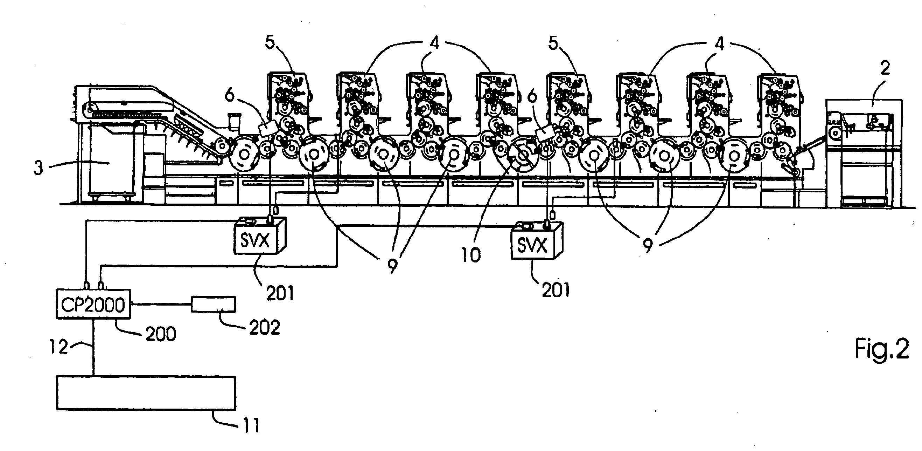

Fig. 2 zeigt eine Bogenrationsdruckmaschine 1, welche zum Unterschied zu Fig. 1 mit einer Bogenwendeeinrichtung 10 ausgerüstet ist, so dass bei Schön- und Widerdruck in den ersten vier Druckwerken 4, 5 die eine Seite eines Bogens 705 bedruckt werden kann und in zweiten vier Druckwerken 4, 5 die andere Seite. Aus diesem Grund hat die Druckmaschine 1 in Fig. 2 zwei Druckwerke 5, an denen ein Messbalken 6 angebracht ist, da sowohl die Vorderseite als auch die Rückseite eines Bogens jeweils mit einem Messbalken 6 kontrolliert werden muss. Um auch hier den Endzustand des bedruckten Bogens 705 sowohl in Bezug auf Vorder- als auch Rückseite begutachten zu können, befinden sich die Messbalken 6 im letzten Druckwerk 5 vor der Wendeeinrichtung 10 und im letzten Druckwerk 5 vor dem Bogenausleger 3. Als eine Besonderheit weist die Bogendruckmaschine 1 in Fig. 2 die Möglichkeit auf, die Messbalken 6 zu versetzen. D. h. der Messbalken 6 ist leicht entnehmbar ausgestaltet und kann auch in ein anderes Druckwerk 4 eingebaut werden. In Fig. 2 sind dazu auch Anschlüsse an den den beiden Druckwerken 5 vorhergehenden Druckwerken 4 angebracht. Die zur Aufnahme eines Messbalkens 6 ausgelegten Druckwerke 5, 4 sind dazu mit elektrischen Anschlüssen versehen, welche jeweils an eine Messelektronik 201 angeschlossen sind. Beim Einstecken des Messbalkens 6 in das jeweilige Druckwerk 5, 4 wird über eine entsprechende Kodierung der Messelektronik 201 automatisch mitgeteilt, in welchem Druckwerk 5, 4 sich der Messbalken 6 aktuell befindet. Die Messelektronik 201 ist wiederum mit dem Steuerpult und Rechner 200 der Druckmaschine 1 verbunden, so dass dort alle Messwerte dem Bedienpersonal der Druckmaschine 1 angezeigt werden können. Außerdem können am Bedienpult 200 die Einstellungen der Druckmaschine 1 verändert werden, um die Druckqualität zu steuern. Der Rechner 200 der Druckmaschine 1 ist zudem über eine kabelgebundene oder drahtlose Verbindung 12 z.B. auch über eine Internetverbindung mit Geräten der Druckvorstufe 11 verbunden, solche Geräte 11 sind insbesondere Plattenbelichter zur Herstellung von Druckplatten für Offsetdruckmaschinen. Durch die Verbindung 12 zur Druckvorstufe 11 ist es möglich, die aus den Messungen des Messbalkens 6 stammenden Daten auch zur Veränderung des Herstellungsprozesses in der Vorstufe 11 zu verwenden. Damit können weitergehende Änderungen im Druckprozess vorgenommen werden, als dies durch bloße Veränderungen an den Einstellungen der Druckmaschine 1 möglich wäre. Außerdem kann die Herstellung der Druckplatten optimiert werden. An den Rechner 200 der Druckmaschine 1 ist weiterhin ein Handmessgerät 202 anschließbar, welches zu Kalibrierungszwecken der Messmodule 603 verwendet werden kann.

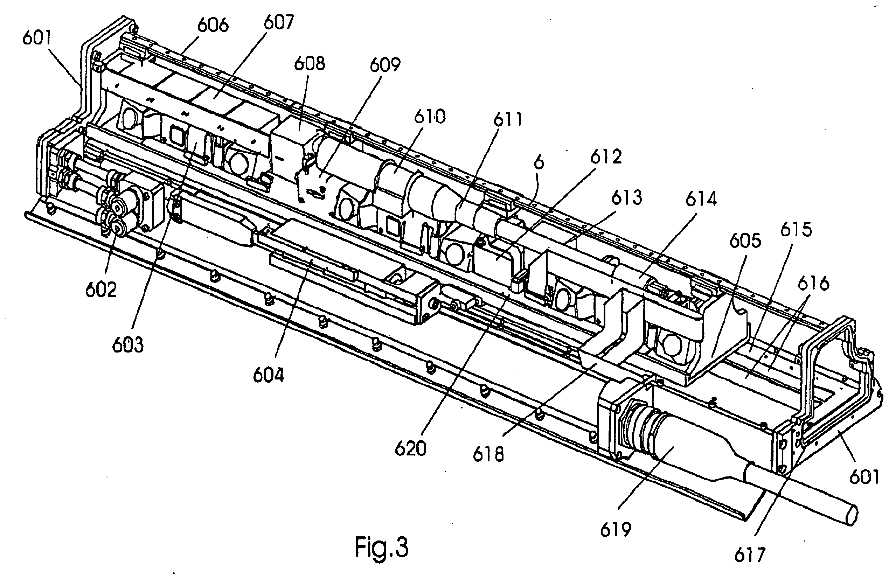

Das Innere des Messbalkens 6 ist in Fig. 3 abgebildet, wobei der Messbalken 6 derart aufgebaut ist, dass dieser im Druckwerk 5, 4 fixiert werden kann, während im Inneren des Messbalkens 6 ein verfahrbarer Messwagen 605 angeordnet ist. Der Messbalken 6 erstreckt sich dabei über die gesamte Breite eines Druckbogens, um auch die Randbereiche des Druckbogens zu verlässig kontrollieren zu können. Der Messwagen 605 kann dazu im Inneren des Messbalkens 6 verfahren werden, um ebenfalls über die gesamte Breite des Bogens messen zu können. Zur Erfassung der Oberfläche des Druckbogens weist der Messwagen 605 in Fig. 3 acht Messmodule 603 mit 8 Messköpfen 622 auf, wobei der Messwagen 605 in mehreren Schritten oder kontinuierlich verfahrbar ist, so dass bei 4 Farben nach 16 Messungen sämtliche 32 Farbzonen über mehrere Druckbogen 705 hinweg vermessen worden sind. Für diesen Verfahrvorgang ist der Messwagen 605 in einer Führungsschiene 606 gelagert, wobei er von einem Linearmotor 604 angetrieben wird. Zur einfachen Wartung des Messwagens 605 kann dieser dem Messbalken 6 seitlich entnommen werden, in dem die Seitenwände 601 entfernt werden. Dazu sind die Seitenwände 601 leicht abnehmbar ausgestaltet, d. h. sie sind mit mehreren Schrauben am Gehäuse des Messbalkens 6 befestigt.

Der Messbalken 6 besteht im Wesentlichen aus einem U-förmigen Profil, welches auf der dem Druckbogen zugewandten Seite offen ist. Um ein Eindringen von Schmutz und insbesondere Druckfarbe zu verhindern, ist die offene Seite des U-Profils mit einem abnehmbaren Boden 615 verschlossen, welcher zusätzlich durchsichtige Teile 616 aus Glas aufweist, so dass die Messmodule 603 auf dem Messwagen 605 durch den Boden 616 des Messwagens 615 hindurch den darunter liegenden Bedruckstoff abtasten können. Neben den Messmodulen 603 samt ihrer Elektronik befinden sich auf dem Messwagen 605 weitere Einrichtungen. Da die Messmodule 603 neben den spektralen Messköpfen 622 noch Beleuchtungsmodule 623 aufweisen, muss der Messwagen 605 mit einer Beleuchtungsquelle 610 versehen sein. Die Beleuchtungsquelle stellt eine Blitzlampe 610 dar, welche von einem auf dem Messwagen befindlichen Netzgerät 612 mit elektrischer Energie versorgt wird. Das Netzgerät 612 wiederum und die Elektronik der Messmodule 603 ist über flexible elektrische Kabel 618 mit dem Gehäuse des Messbalken 6 verbunden. Das am Gehäuse des Messbalkens 6 befestigte Ende der flexiblen Elektrokabel 618 endet in einer elektrischen Steckerverbindung 619, mittels deren der Messbalken 6 mit der elektrischen Spannungsversorgung der Druckmaschine 1 und der Messelektronik 201 verbunden wird. Der Anschluss von elektrischer Energie und Signalübertragung kann dabei mittels eines steckbaren oder drehbaren Kombisteckers erfolgen. Alle elektrischen Bauteile einschließlich der Messmodule 603 sind auf einer oder weniger Platinen 631 angebracht, um kurze Strom- und Signalpfade auf engem Raum zu gewährleisten.

Da sich auf dem Messwagen 605 nur eine Blitzlampe 610 befindet, muss ihr Blitzlicht mittels einer Einkopplungsoptik 611 und sich daran anschließenden Lichtleitern 614 zu den einzelnen Beleuchtungsmodulen 623 transportiert werden. Neben dem Netzgerät 612 der Blitzlampe 610 befinden sich zur Bereitstellung der nötigen Energie und noch Blitzkondensatoren 607 auf dem Messwagen 605. Außerdem beinhaltet der Messwagen 605 eine Verteilereinrichtung 620 zur Verteilung elektrischer Energie an die einzelnen elektrischen Verbraucher und zur Verteilung der elektrischen Signale der miteinander vernetzten Komponenten im Messwagen 605. Die Abtasteinrichtung 6 ist jedoch nicht nur in der Lage die Oberfläche eines Druckbogens spektral zu vermessen, sondern sie dient auch zur Erfassung von Registermarken und zur Auswertung derselben. Dazu weist der Messwagen 605 einen rechten Registersensor 608 und einen linken Registersensor 613 auf. Damit ist es möglich, die Registermarken in den Randbereichen eines Druckbogens zu erfassen. Es können auch noch weitere Registersensoren vorhanden sein, so kann jedes Messmodul 603 einen Registersensor beinhalten, damit parallel mehrere Registermarken über die gesamte Breite des Bedruckstoffs 705 hinweg vermessen werden können.

Da die gesamte Elektronik im Messwagen 605 auf sehr geringem Bauraum untergebracht ist, so sind beispielsweise 70 Prozent des Volumens des Messwagens 605 mit Bauteilen gefüllt, entsteht auf relativ geringem Raum viel Abwärme. Um die Abwärme abführen zu können und um insbesondere Schädigungen und Beeinflussung der Messmodule 603 zu verhindern, wird das Innere des Messbalkens 6 flüssigkeitsgekühlt. Durch mehrere Kanäle 621 im Inneren des Messbalkens 6 und den Seitenwänden 601 wird ein geschlossener Kühlkreislauf hergestellt, wobei dieser Kühlkreislauf über Kühlmittelkanäle 617 in den Seitenwänden 601 geschlossen wird. Die Kühlmittelkanäle 621, 617 werden über einen Kühlmittelanschluss 602 an der Außenseite des Messbalkens 6 mit Kühlmittel versorgt. Eine Pumpe zum Umwälzen des Kühlmittels muss daher nicht im Inneren des Messbalkens 6 selbst angebracht sein, sondern kann außen angeschlossen werden.

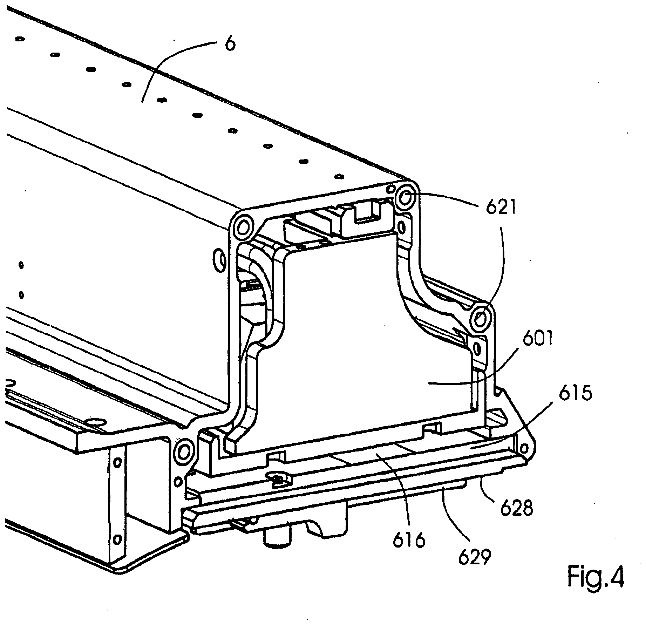

Die in Fig. 4 gezeigte Seitenansicht des Messbalkens 6 zeigt neben dem im Wesentlichen U-förmigen Profil des Messbalkens 6 die im U-Profil verlaufenden Kühlkanäle 621, welche an den beiden Stirnflächen des Messbalkens 6 durch die Kühlmittelkanäle 617 in den Seitenwänden 601 zum geschlossenen Kreislauf verbunden werden. Des weiteren ist die gläserne Abdekkung 615 im Messbalkenboden zu sehen, welche die empfindlichen Messmodule 603 auf dem Messwagen 605 gegen Verschmutzung schützt. Das U-förmige Gehäuse des Messbalkens 6, die Seitenwände 601 und der Messbalkenboden 615 mit seinen gläsernen Einsätzen 616 sind über Dichtungen miteinander verbunden, so dass kein Staub oder Flüssigkeiten in das Innere des Messbalkens 6 gelangen können. Weiterhin befindet sich an der Außenseite des Bodens 615 eine schmutzabweisende Oberfläche 628, über welcher sich quer zur Längsausdehnung des Messbalkens befindliche Stege 629 erstrecken. Die Stege 629 halten den Bedruckstoff 705 auf Abstand wenn er vermessen wird und vermeiden so den direkten Kontakt von Bedruckstoff 705 und Boden 615. Auch die Stege 629 können schmutzabweisend beschichtet sein.

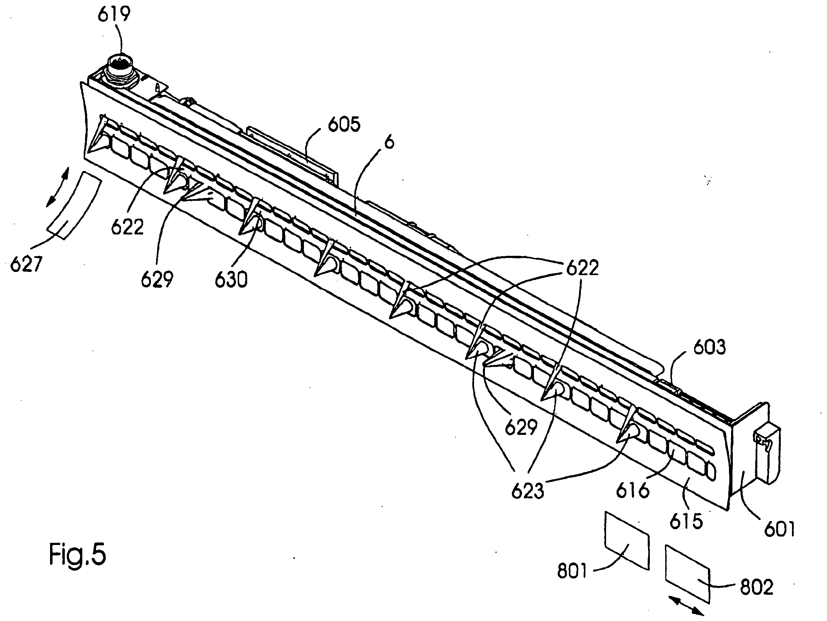

Fig. 5 zeigt eine Ansicht von unten des Messbalkens 6, wobei hier der Messbalkenboden 615 gut zu sehen ist. Der Messwagen 605 weist acht Messmodule 603 auf, welche jeweils aus den eigentlichen Messköpfen 623 und Beleuchtungsmodulen 623 bestehen. Um die gesamte Breite eines Druckbogens mit 32 Farbzonen vermessen zu können wird der Messwagen 605 nach jedem Messvorgang um ein oder mehrere Messfelder seitlich verfahren. Der Abstand zwischen den Messmodulen 603 beträgt somit vier Farbzonen, so dass die Messmodule 603 genau jede vierte Farbzone parallel vermessen. Nach vier Abtastvorgängen ist dann der Bogen über sämtliche 32 Farbzonen einer Farbe hinweg vermessen worden. Wenn mit vier Farben gedruckt wird, sind entsprechend 16 Abtastvorgänge notwendig. Weiterhin ist in Fig. 5 ein beweglicher Verschluss 627 zu sehen, welcher ein Messmodul 603 abdecken kann. Der Verschluss 627 kann an jedem Modul 603 vorhanden sein und wird elektrisch oder mechanisch angetrieben, es kann aber auch ein gemeinsamer Verschluss 627 für alle Module 603 eingesetzt werden. Der Verschluss 627 ist in Fig. 5 in Bogentransportrichtung quer zum Messbalken 6 verfahrbar und schützt die Optik der Messmodule 603 vor Schäden zwischen den Messvorgängen, er kann auch die gesamte Unterseite des Messbalkens 6 zwischen den einzelnen Messvorgängen abdecken. Dazu ist der Antrieb des Verschlusses 627 mit dem Rechner 200 der Druckmaschine gekoppelt.

An einer Stirnseite 601 oder auch an beiden ist in Fig. 5 eine Kalibrierungsfläche 801 angeordnet, welche von den außen gelegenen Messmodulen 603 angefahren werden kann. Wird ein Messmodul 603 über der Kalibrierungsfläche 801 positioniert, so wird dessen genormte Oberfläche vermessen. Bei der Oberfläche handelt es sich um eine weiße Kachel, welche Papierweiß entspricht. Durch die Vermessung der Kachel 801 kann ein Messmodul 603 jederzeit zwischen zwei Messungen auf dem Bedruckstoff 705 kalibriert werden. Die Messmodule 603, welche die Kachel 801 nicht anfahren können, werden durch Transferkalibrierung der benachbarten Messmodule 603 kalibriert. Um die Kachel 801 vor Verschmutzung zu schützen, ist diese ebenfalls mittels einer seitlich verfahrbaren Abdeckung 802 verschließbar. So wird die Kachel 801 zwischen den Kalibrierungsmessungen immer von der Abdeckung 802 bedeckt gehalten.

Auch in Fig. 5 sind schmutzabweisende und den Bogen auf Abstand haltende Stege 629 zu sehen. Diese Stege 629 sind mit der Abdeckung 615 des Messbalkens 6 verbunden. Der Messbalken wird durch eine unter der Abdeckung 615 liegende Glasschicht 616 abgedichtet. Zur Reinigung der Glasschicht 616 ist die Abdeckung 616 mit den Stegen 629 und den Aussparungen für die freie Sicht der Messmodule 603 auf den Bogen 705 wegklappbar oder entnehmbar ausgestaltet, so dass die Glasschicht 616 leicht vollflächig gereinigt werden kann.

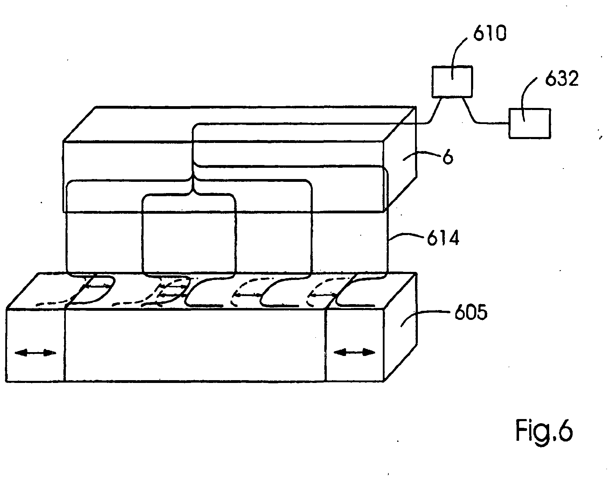

Neben der in Fig. 3 dargestellten Möglichkeit mit auf dem Messwagen 605 angeordneter Lichtquelle 610, ist es auch möglich, gemäß der Anordnung in Fig. 6 die Blitzlampe 610 außerhalb des Messwagens 605 und sogar außerhalb des Messbalkens 6 anzubringen. In diesem Fall müssen flexible Lichtleiter 614 eingesetzt, welche die nicht beweglichen Teile des Messbalkens 6 und den Messwagen 605 verbinden. Die flexiblen Lichtleiter 614 können aber auch dann eingesetzt werden, wenn sich die Lampe 610 wie in Fig. 3 auf dem Wagen 605 befindet. Dabei können die Lichtleiter 614 wie in Fig. 6 separat zu jedem Messmodul 603 geführt werden, es ist aber auch möglich die Lichtleiter 614 an einer Stelle zu bündeln und über längere Wege im Inneren des Messwagens 605 an das jeweilige Messmodul 603 zu führen. Wenn alle Messmodule 603 das Licht einer einzigen Lichtquelle 610 erhalten, ist sichergestellt, dass alle Messmodule 603 das gleiche Licht bei der Messung verwenden und daher die Messbedingungen für alle Module 603 gleich sind. Es kann auch noch ein zusätzlicher Lichtleiter 614 an die Lampe 610 angeschlossen sein, welcher auf der anderen Seite in einem Lichtreferenzmesskopf 632 mündet. Dieser Lichtreferenzmesskopf 632 hat die Aufgabe, das Licht der Lampe 610 zu vermessen und bei Änderung ein Signal zur Wartung und Kontrolle abzugeben. Somit wird eine defekte bzw. eine alterungsbedingt mit nicht mehr ausreichender Leuchtkraft ausgestattete Lampe 610 rechtzeitig erkannt.

Alternativ zu flexiblen Lichtleitern 614 in Fig. 6 kann wie in Fig. 7a und 7b gezeigt auch das Prinzip der optischen Posaune verwendet werden. In diesem Fall enden die Lichtleiter des Messwagens 605 und des Messbalkens 6 jeweils an den Stirnflächen 625, 626 derselben, so dass sie sich immer genau ausgerichtet gegenüber liegen. Zwischen den Stirnflächen 626 der Lichtleiter des Messwagens 605 und den Stirnflächen 625 des Messbalkens 6 befindet sich ein optischer Zwischenraum 624, welcher wie in Fig. 7a und 7b gezeigt in Abhängigkeit der Position des Messwagens 605 unterschiedlich groß ist. Der optische Zwischenraum 624 zwischen den Lichtleitern kann dadurch überbrückt werden, dass er verspiegelt ist. Mittels dieser Spiegel können die aus den Lichtleitern des Messbalkens 6 austretenden Lichtstrahlen in jeder Position des Messwagens 605 in die Lichtleiter desselben eingekoppelt werden. Eine solche optische Posaune ist weniger verschleißanfällig als flexible Lichtleiter 614, was in Anbetracht millionenfacher Messvorgänge von enormer Wichtigkeit ist. Es hat sich nämlich herausgestellt, dass flexible Lichtleiter 614 nach relativ wenigen Messvorgängen zum Brechen neigen und dann ausgetauscht werden müssen.

Fig. 8a und 8b zeigen jeweils den Messbalken 6 von unten her gesehen, mit zwei unterschiedlichen Anordnungen von Messköpfen 622 und Beleuchtungsmodulen 623. In der Anordnung gemäß Fig. 8a sind die Messköpfe 622 und die Beleuchtungsmodule 623 überkreuz aufeinander ausgerichtet, so dass das Licht, welches vom Bedruckstoff reflektiert wird nicht vom direkt gegenüber liegenden Messkopf 622 abgetastet wird sondern kreuzweise verschränkt. Eine solche Anordnung erlaubt die Anordnung vieler Messköpfe auf engem Raum, da hier der Abstand zwischen den Messköpfen 622 und den gegenüber liegenden Beleuchtungsmodulen 623 im Vergleich zu einer Anordnung gemäß Fig. 8b geringer ausfallen kann, bei der die Messköpfe 622 das reflektierte Licht genau gegenüber liegender Beleuchtungsmodule 623 abtasten. Der geringere Bauraum in Fig. 8a resultiert aus der diagonalen Verschränkung, da sich der Abstand zwischen den Beleuchtungsmodulen 623 und den zugehörigen Messköpfen 622 nicht beliebig verkleinern lässt. Der Abstand ist durch den Strahlengang vom Beleuchtungsmodul 623 zum Bedruckstoff und zurück zum Messkopf 622 festgelegt. Mit der Überkreuzlösung lässt sich die Breite des Messbalkens 6 bzw. des Messwagens 605 verringern. Da bei den beengten Platzverhältnissen in der Nähe des Druckspaltes 100 eines Druckwerks 4, 5 der Platzbedarf ein entscheidendes Kriterium ist, ist für diesen Fall die Anordnung gemäß Fig. 8a besser geeignet.

In Fig. 9 ist ein Druckkontrollstreifen 700 auf einem Druckbogen 705 dargestellt. Der Druckkontrollstreifen 700 so wie das eigentliche Druckbild wird in den Druckwerken 4, 5 der Druckmaschine 1 auf den Bogen 705 gedruckt. Nach dem letzten Druckwerk 5 ist der Bogen 705 und der Druckkontrollstreifen 700 komplett und kann durch den Messbalken 6 vermessen werden. Der Bogen 705 liegt hier im sogenannten Mittelformat d.h. in einer Bogenbreite von 74 cm vor und weist 23 Farbzonen 701, 703 auf. Jede Farbzone 701, 703 besteht aus 6 Farbmessfeldern 702 und vier weiteren Messfeldern 704. Diese Farbzonen 701, 703 werden von den Messmodulen 603 des Messbalkens 6 vermessen. Normalerweise wird auf einem Bogen 705 nur ein Messfeld 702, 704 pro Farbauszug und Farbzone 701, 703 durch ein Messmodul 603 vermessen. Bei 23 Farbzonen 701, 703 und sechs Messmodulen 603 sowie 10 Messfeldern 702, 704 pro Farbzone ergibt dies 40 Messvorgänge an 40 Druckbogen 705 bevor alle Messfelder 701, 703 einmal erfasst wurden. Für mehr Messungen auf weniger Bogen müssen mehr Messmodule 603 vorgesehen werden. Weiterhin können auf einem Bogen auch mehrere Druckkontrollstreifen 700 angebracht sein, z.B. einer am Bogenanfang und einer in der Bogenmitte oder am Bogenende. Alternativ können während des Fortdruckbetriebs, d.h. wenn die Druckmaschine 1 mit Produktionsgeschwindigkeit läuft und sämtliche Messfelder 702, 704 ihren gewünschten Zustand erreicht haben, die Messmodule 603 auch über speziellen Messfeldern 702, 704 platziert werden, die Farbinformationen über mehrere oder alle Farben enthalten. Die Messmodule 603 müssen dann entweder gar nicht oder viel seltener verfahren werden, da hier die Farbinformationen in einem Messfeld örtlich kompakt vorliegen. Bei Änderungen innerhalb der speziellen Messfelder wird dann wieder der Messmodus geändert, und es werden wieder alle Messfelder 702, 704 wie in der Anlaufphase vermessen.

Fig. 10 zeigt eine ähnliche Ausführungsform wie Fig. 5, bei beiden Ausführungsformen befindet sich ein seitlich verfahrbarer Messwagen 605 in einem gekapselten, abgeschlossen Messbalken 6. Allerdings weist in Fig. 10 der Messbalken eine durchgehende Glasabdeckung 634 auf, welche die Unterseite des Messbalkens 6 verschließt. An der Außenseite des Messbalkens 6 befindet sich weiterhin über der durchgehenden Glasabdeckung 634 ein Bogenleitblech zur Bogenführung 633, welches in Längsrichtung zwei Schlitze 639 trägt. Durch diese Schlitze 639 und die Glasabdeckung 634 hindurch können die Messmodule 603 bestehend aus Messkopf 622 und Beleuchtungsmodul 623 im Messwagen 605 einen unter der Bogenführung 633 hindurchlaufenden Bedruckstoff 705 vermessen. Zusätzlich befinden sich außen auf der Glasabdeckung 634 und innerhalb der Schlitze 639 angeordnete Stege 629. Die Stege 629 verhindern, dass der Bedruckstoff 705 die Glasabdeckung 634 berührt und damit verschmutzt. Da die Stege 629 wie in Fig. 10 abgebildet unter Umständen im Strahlengang der Messmodule 603 stehen können, da der Messwagen 605 über die gesamte Breite des Bedruckstoffs hinweg messen muss, ist eine Kompensationsvorrichtung vorzusehen, welche den Einfluss der Stege 629 im Strahlengang der Messmodule 603 kompensiert. Eine solche Kompensationsvorrichtung ist an anderer Stelle dieser Anmeldung bereits beschrieben worden.

Eine alternative Ausführungsform zu Fig. 10 zeigt Fig. 11. Auch hier befindet sich ein verfahrbarer Messwagen 605 in einem Messbalken 6, allerdings ist der Messbalken nach unten hin offen, weswegen der Messwagen 605 durch einen Boden 635 verschlossen ist. Der Messwagen 605 weist dazu einen Boden 635 aus Blech auf, welcher zusätzlich mit verglasten Durchsichtöffnungen 636 versehen ist. Die Glasöffnungen 636 sind genau unterhalb der Strahlengänge der Messmodule 603 positioniert. Daher sind in Fig. 11 bei 8 Messmodulen 603 auf dem Messwagen 605 genau 16 gläserne Durchsichtöffnungen 636 unterhalb der 8 Messköpfe 622 und 8 Beleuchtungsmodule 623 angebracht. Die gläsernen Öffnungen 636 können wie in Fig. 11 kreisrund ausgeführt sein, sie können aber auch oval, rechteckig oder in einer anderen Form ausgestaltet sein. Neben den verglasten Durchsichtöffnungen 636 befinden sich im Boden 635 des Messwagens noch kleine Blasluftkanäle 637, durch die Blasluft aus dem Inneren des Messwagens 605 entweichen kann. Diese Blasluft wird dazu genutzt, den Bedruckstoff 705 gegenüber dem Boden 635 auf Abstand zu halten, um einen Kontakt des Bogens 705 und damit eine Verschmutzung der gläsernen Öffnungen 636 zu vermeiden. Gleichzeitig wird mittels dem durch die Blasluft erzeugten Überdruck im Innern des Messwagens 605 verhindert, dass Fremdkörper von außen in das Innere des Messwagens 605 eindringen. Die Blasluftkanäle 637 werden mittels einer Blasluftquelle 638 z.B. einem kleinen Kompressor oder Ventilator im Innern des Messwagens 605 mit Blasluft beaufschlagt.

Die Figuren 12a, 12b, 12c und 12d zeigen verschiedene Fixierungsmöglichkeiten des Bedruckstoffs 705 während des Messvorgangs durch den Messbalken 6 in einer Bogenrotationsdruckmaschine 1. Neben der aus Fig. 1 bekannten Möglichkeit in Fig. 12a, den Bedruckstoff 705 an seinem einen Ende mittels eines Bogentransportgreifers 101 und an seinem anderen Ende durch den Druckspalt 100 zwischen Gegendruckzylinder 7 und Gummituchzylinder 8 festzuhalten, gibt es noch weitere Möglichkeiten, den Bogen 705 auch dann zu fixieren, wenn er sich nicht im Druckspalt 100 befindet. Gemäß Fig. 12b wird ein Bogen 705 an beiden Enden von Transportgreifern 101 auf einem Transportzylinder 9 gehalten und so während der Messung unter dem Messbalken 6 fixiert. Anstelle zumindest des in Bogentransportrichtung nachführenden Transportgreifers 101 kann auch wie in Fig. 12c eine Blaseinrichtung 16 über dem Transportzylinder 9 installiert sein, welche das freie nicht-in einem Greifer fixiert Ende des Bogens 705 auf den Transportzylinder 9 drückt und so fixiert. Weiterhin ist auch eine Lösung gemäß Fig. 12d einsetzbar. Bei dieser Lösung wird der Bogen 705 auf dem Transportzylinder 9 im wesentlichen mittels Unterdruck fixiert. Dazu weist der Zylinder 9 an der Oberfläche, welche mit dem Bogen 705 in Kontakt kommt, mehrere Luftöffnungen 18 auf, welche mit einer Unterdruckkammer 17 im Innern des Zylinders 9 in Verbindung stehen. Der Unterdruck fixiert so den Bogen 705 auf dem Zylinder, was zusätzlich noch durch einen Transportgreifer 101 unterstützt werden kann, aber nicht muss. Die Unterdruckkammer 17 kann Bestandteil einer Saugpumpe im Innern des Zylinders 9 sein oder an eine Saugpumpe außerhalb des Zylinders 9 angeschlossen sein.

Wie die Montage des Messbalkens 6 in einem Druckwerk einer Druckmaschine 1 vorgenommen wird, erläutert Fig. 13. In der Draufsicht auf den Einbauort in der Druckmaschine 1 ist zu erkennen, dass der Messbalken 6 prinzipiell quer zur Bogentransportrichtung 19 zwischen den Seitenwänden 14 der Druckmaschine 1 eingebaut wird. Da der Messbalken 6 auch in schon bestehenden Maschinen nachrüstbar sein soll, geschieht die Montage über zwei seitliche Montageplatten 20, welche prinzipiell in jede Druckmaschine 1 eingebaut werden können, so lange der erforderliche Platz vorhanden ist. Die Montageplatten 20 können auch unterschiedliche Abstände zwischen den Seitenwänden 14 ausgleichen, indem sie unterschiedlich dick ausgeführt sind. Die Montageplatten 20 werden mittels Montageschrauben 21 an den Seitenwänden 14 befestigt und tragen die Lagerung für den Messbalken 6.Der Messbalken 6 weist an seinen beiden Enden jeweils Abdeckungen 22 auf, welche den Messbalken 6 umschließen und Lager 23 tragen. Diese Lager 23 stützen den Messbalken 6 gegenüber den Montageplatten 20 ab und mindern Vibrationen, welche die Druckmaschine 1 auf den Messbalken 6 übertragen würde. Die Abdeckungen 22 können so ausgestaltet sein, dass der Messbalken 6 einfach aus den Abdeckungen 22 entnommen werden kann.

### Bezugszeichenliste

- 1: Druckmaschine
- 2: Anleger
- 3: Ausleger
- 4: Druckwerk
- 5: Druckwerk mit Messbalken
- 6: Messbalken
- 7: Gegendruckzylinder
- 8: Gummituchzylinder
- 9: Transportzylinder
- 10: Bogenwendeeinrichtung
- 11: Druckvorstufe
- 12: Vernetzung
- 13: Farbwerk
- 14: Seitenwand
- 15: Sensor
- 16: Blaseinrichtung
- 17: Unterdruckkammer
- 18: Luftöffnungen
- 19: Bogentransportrichtung
- 20: Montageplatten
- 21: Montageschrauben
- 22: Abdeckung des Messbalkens
- 23: Lager des Messbalkens
- 100: Druckspalt
- 101: Bogentransportgreifer
- 200: Steuerpult/Rechner
- 201: Messelektronik
- 202: Handmessgerät
- 601: Seitenwand des Messbalkens
- 602: Kühlmittelanschluss
- 603: Messmodul
- 604: Linearmotor
- 605: Messwagen
- 606: Führungsschiene für Messwagen
- 607: Kondensatoren für Blitzlampe
- 608: Registersensor rechts
- 609: Referenzmesskopf
- 610: Blitzlampe
- 611: Lichtleitereinkopplungsoptik
- 612: Netzgerät für Blitzlampe
- 613: Registersensor links
- 614: Lichtleiter
- 615: Abdeckung des Messbalkens
- 616: Verglaster Bereich in der Abdeckung
- 617: Kühlmittelführung in der Seitenwand
- 618: Flexibler elektrischer Anschluss
- 619: Anschluss für Messelektronik
- 620: Elektrische Verteilereinrichtung
- 621: Kühlkanal im Messbalken
- 622: Messkopf
- 623: Beleuchtungsmodul
- 624: Optischer Zwischenrau
- 625: Stirnfläche zweites Lichtleiterbündel
- 626: Stirnfläche erstes Lichtleiterbündel
- 627: beweglicher Verschluss
- 628: schmutzabweisende Oberfläche
- 629: Steg
- 630: zweiter Messkopf
- 631: Platine
- 632: Lichtreferenzmesskopf
- 633: Bogenführung
- 634: durchgehende Glasabdeckung
- 635: Boden des Messwagens
- 636: verglaste Durchsichtöffnungen
- 637: Blasluftkanäle
- 638: Blasluftquelle
- 700: Druckkontrollstreifen
- 701: Farbzone
- 702: Farbmessfeld
- 703: weitere Farbzone
- 704: weiteres Messfeld
- 705: Bedruckstoff
- 800: Fremdlichtquelle
- 801: Kalibrierungsfläche
- 802: Abdeckung Kalibrierungsfläche

## Patentansprüche

1. Verfahren zur Überwachung der Druckqualität während des Druckprozesses in einer Druckmaschine (1) zur Verarbeitung bogenförmiger Bedruckstoffe (705) mit wenigstens einem Druckwerk (4, 5) und mit einer den Bedruckstoff (705) erfassenden Abtasteinrichtung (6) sowie einem Rechner (201, 200), wobei der bogenförmige Bedruckstoff (705) von wenigstens einem bogenführenden Element (100,101) an der Abtasteinrichtung (6) vorbei geführt wird und die Abtasteinrichtung (6) den bogenförmigen Bedruckstoff (705) farblich oder spektral misst,
wobei der Bedruckstoff (705) im Druckwerk (5) während des Abtastvorganges von einem Transportgreifer (101) einer bogenführenden Trommel (7) und dem Druckspalt (100) des Druckwerkes (5) gehalten wird,
**dadurch gekennzeichnet,**
**dass** eine mit dem Rechner (200, 201) verbundene Kompensationseinrichtung vorhanden ist, welche den Einfluss von auf den Bedruckstoff fallendem Licht kompensiert.

2. Verfahren nach Anspruch 1,
**dadurch gekennzeichnet,**
**dass** die Abtasteinrichtung (6) in wenigstens einem Druckwerk (5) der Druckmaschine (1) an der den Bedruckstoff (705) ausgebenden Seite des Druckwerks (5) nahe am Druckspalt (100) angebracht ist.

3. Verfahren nach einem der Ansprüche 1 bis 2,
**dadurch gekennzeichnet,**
**dass** die Abtasteinrichtung (6) zusätzlich densitometrisch misst.

4. Verfahren nach einem der vorhergehenden Ansprüche,
**dadurch gekennzeichnet,**
**dass** die Abtasteinrichtung (6) auch die Registermessung, Positionserkennung von Registermarken und oder Ermittlung der Art des Bedruckstoffes (705) vornimmt.

5. Verfahren nach einem der vorhergehenden Ansprüche,
**dadurch gekennzeichnet,**
**dass** die Abtasteinrichtung (6) in oder nach dem in Bedruckstofftransportrichtung gesehen letzten Druckwerk (5) der Druckmaschine (1) eingebaut ist.

6. Verfahren nach einem der vorhergehenden Ansprüche,
**dadurch gekennzeichnet,**
**dass** die Druckmaschine (1) eine Bogenwendeeinrichtung (10) aufweist und dass wenigstens eine Abtasteinrichtung (6) vor der Bogenwendeeinrichtung (10) und eine Abtasteinrichtung (6) nach der Bogenwendeeinrichtung (10) angeordnet ist.

7. Verfahren nach einem der vorhergehenden Ansprüche,
**dadurch gekennzeichnet,**
**dass** die Abtasteinrichtung (6) die Form eines Messbalkens aufweist.

8. Verfahren nach Anspruch 7,
**dadurch gekennzeichnet,**
**dass** der Messbalken (6) in seiner Längsrichtung verschiebbar gelagert ist.

9. Verfahren nach einem der vorhergehenden Ansprüche,
**dadurch gekennzeichnet,**
**dass** die Abtasteinrichtung (6) drehbar oder ausziehbar gelagert oder austauschbar ist.

10. Verfahren nach einem der Ansprüche 7 bis 9,
**dadurch gekennzeichnet,**
**dass** der Messbalken (6) die Form eines in Richtung des Bedruckstoffes offenen U-Profils aufweist und im Inneren des U-Profils wenigstens einen beweglichen Messwagen (605) aufnimmt.

11. Verfahren nach Anspruch 10,
**dadurch gekennzeichnet,**
**dass** der Messbalken (6) wenigstens eine abnehmbare Seitenwand (601) aufweist.

12. Verfahren nach Anspruch 10 oder 11,
**dadurch gekennzeichnet,**
**dass** der Messwagen (605) ein oder mehrere Messmodule (603) aufweist.

13. Verfahren nach einem der Ansprüche 10 bis 12,
**dadurch gekennzeichnet,**
**dass** der Messwagen (605) ein oder mehrere Registersensoren (608, 613) aufweist.

14. Verfahren nach einem der vorhergehenden Ansprüche,
**dadurch gekennzeichnet,**
**dass** die Abtasteinrichtung (6) wenigstens eine Beleuchtungseinrichtung (610) aufweist.

15. Verfahren nach Anspruch 14,
**dadurch gekennzeichnet,**
**dass** das Aufleuchten der Beleuchtungseinrichtung (610) mit dem Messzeitpunkt der Abtasteinrichtung (6) synchronisiert erfolgt.

16. Verfahren nach einem der Ansprüche 10 bis 15,
**dadurch gekennzeichnet,**
**dass** der Messwagen (605) von einem Motor (604) angetrieben im U-Profil verfährt.

17. Verfahren nach einem der vorhergehenden Ansprüche,
**dadurch gekennzeichnet,**
**dass** die Abtasteinrichtung (6) in einer Bogenrotationsdruckmaschine (1) zugleich als bogenführendes Element ausgestaltet ist.

18. Verfahren nach einem der vorhergehenden Ansprüche,
**dadurch gekennzeichnet,**
**dass** mittels der Abtasteinrichtung (6) die Position eines Druckkontrollstreifens (700) erkannt wird und der Messzeitpunkt für eine Farbmessung erfasst wird.

19. Verfahren nach einem der vorhergehenden Ansprüche,
**dadurch gekennzeichnet,**
**dass** die Abtasteinrichtung (6) an einen Rechner (200, 201) angeschlossen ist.

20. Verfahren nach einem der vorhergehenden Ansprüche,
**dadurch gekennzeichnet,**
**dass** die Abtasteinrichtung (6) ein oder mehrere Messmodule (603) aufweist und in dem Rechner (200, 201) Kalibrierungsdaten für jedes Modul (603) abgespeichert werden.

21. Verfahren nach einem der vorhergehenden Ansprüche,
**dadurch gekennzeichnet,**
**dass** die Abtasteinrichtung (6) über eine Ethernet-Schnittstelle (619) oder eine andere standardisierte Computerschnittstelle (619) verfügt.

22. Verfahren nach Anspruch 14 und einem der Ansprüche 15 bis 21,
**dadurch gekennzeichnet,**
**dass** die Beleuchtungseinrichtung mit Lichtleitern (614) versehen ist, welche an einem Ende einzelnen Messmodulen (603) zugeordnet sind und am anderen Ende in einem durchmischten Bündel wenigstens einer Lichtquelle (610) zugeordnet sind.

23. Verfahren nach einem der vorhergehenden Ansprüche,
**dadurch gekennzeichnet,**
**dass** in der Abtasteinrichtung (6) ein oder mehrere Temperatursensoren vorhanden sind.

24. Verfahren nach Anspruch 7 und Anspruch 20 und einem der Ansprüche 12 bis 19 und 21 bis 23,
**dadurch gekennzeichnet,**
**dass** sich die Elektronik (200, 201) zur Verarbeitung der Signale der Messmodule (603) außerhalb des Messbalkens befindet.

25. Verfahren nach Anspruch 7 und Anspruch 20 und einem der Ansprüche 12 bis 19 und 21 bis 23,
**dadurch gekennzeichnet,**
**dass** sich die Elektronik zur Verarbeitung der Signale der Messmodule (603) innerhalb des Messbalkens (6) oder der Messmodule (603) befindet.

26. Verfahren nach Anspruch 8 und Anspruch 14 und einem der Ansprüche 12 bis 25,
**dadurch gekennzeichnet,**
**dass** sich die Beleuchtungseinrichtung (610) außerhalb des Messbalkens (6) befindet.

27. Verfahren nach einem der Ansprüche 12 bis 26,
**dadurch gekennzeichnet,**
**dass** sich die Beleuchtungseinrichtung (610) außerhalb des Messwagens (605) befindet.

28. Verfahren nach einem der Ansprüche 12 bis 26,
**dadurch gekennzeichnet,**
**dass** sich die Beleuchtungseinrichtung (610) im Messwagen befindet.

29. Verfahren nach Anspruch 8 und einem der Ansprüche 12 bis 27,
**dadurch gekennzeichnet,**
**dass** sich die Beleuchtungseinrichtung (610) außerhalb des beweglichen Messwagens (605) befindet,
**dass** parallel aufeinander ausgerichtete am beweglichen Messwagen (605) befindliche Stirnflächen (626) eines ersten Lichtleiterbündels und am Messbalken (6) entsprechende Stirnflächen (625) eines zweiten Lichtleiterbündels vorhanden sind und der Zwischenraum (624) zwischen den beiden Lichtleiterbündeln durch optische Mittel überbrückbar ist.

30. Verfahren nach einem der vorhergehenden Ansprüche,
**dadurch gekennzeichnet,**
**dass** die Abtasteinrichtung (6) mit einer Kühlvorrichtung (602, 617, 621) versehen ist.

31. Verfahren nach einem der vorhergehenden Ansprüche,
**dadurch gekennzeichnet,**
**dass** die Abtasteinrichtung (6) mittels einer durchsichtigen Abdeckung (615, 616) gegen Verschmutzung geschützt wird.

32. Verfahren nach Anspruch 31,
**dadurch gekennzeichnet,**
**dass** die durchsichtige Abdeckung (616) aus gehärtetem Glas besteht.

33. Verfahren nach Anspruch 31 oder 32,
**dadurch gekennzeichnet,**
**dass** die Abtasteinrichtung (6) eine Vorrichtung zur Kontrolle des Zustands der durchsichtigen Abdeckung (616) enthält.

34. Verfahren nach einem der Ansprüche 31 bis 33,
**dadurch gekennzeichnet,**
**dass** die durchsichtige Abdeckung (615, 616) auswechselbar ist.

35. Verfahren nach Anspruch 21 einem der Ansprüche 12 bis 34,
**dadurch gekennzeichnet,**
**dass** die Messmodule (603) mit wenigstens einem beweglichen mechanischen Verschluss (627) versehen sind.

36. Verfahren nach Anspruch 35,
**dadurch gekennzeichnet,**
**dass** die mechanische Verschlussvorrichtung (627) der Messmodule (603) über ein oder mehrere Antriebe in Abhängigkeit des Betriebszustandes der Druckmaschine (1) angesteuert wird.

37. Verfahren nach einem der vorhergehenden Ansprüche,
**dadurch gekennzeichnet,**
**dass** die Abtasteinrichtung (6) ein abgedichtetes Gehäuse umfasst.

38. Verfahren nach einem der vorhergehenden Ansprüche,
**dadurch gekennzeichnet,**
**dass** ein oder mehrere Teile der Abtasteinrichtung (6) mit schmutzabstoßenden Oberflächen (628) versehen sind.

39. Verfahren nach einem der vorhergehenden Ansprüche,
**dadurch gekennzeichnet,**
**dass** Reinigungswerkzeuge vorgesehen sind, welche an die Form der zu reinigenden Teile der Abtasteinrichtung (6) angepasst sind.

40. Verfahren nach einem der Ansprüche 31 bis 39,
**dadurch gekennzeichnet,**
**dass** an der dem Bedruckstoff zugewandten Seite der durchsichtigen Abdeckung (615, 616) der Abtasteinrichtung (6) Stege (629) angeordnet sind.

41. Verfahren nach Anspruch 40,
**dadurch gekennzeichnet,**
**dass** die Stege (629) gegenüber der Abdeckung (615, 616) wegklappbar oder abnehmbar ausgestaltet sind.

42. Verfahren nach einem der vorhergehenden Ansprüche,
**dadurch gekennzeichnet,**
**dass** die Abtasteinrichtung (6) durch aus der Abtasteinrichtung (6) herausströmende Luft gegen das Eindringen von Fremdkörpern abgeschirmt wird.

## Claims

1. Method of monitoring the printing quality during the printing process in a printing press (1) for processing sheet-shaped printing material (705) including at least one printing unit (4, 5) and a scanning device (6) scanning the printing material (705) as well as a computer (201, 200), the sheet-shaped printing material (705) being guided past the scanning device (6) by at least one sheet-guiding element (100, 101) and the scanning device (6) measuring the sheet-shaped printing material in colorimetric or spectral terms,
wherein the printing material (705) in the printing unit (5) is held by a transport gripper (101) of a sheet-guiding drum (7) and by the printing nip (100) of the printing unit (5) during the scanning process,
**characterized in**
**that** a compensation device connected to the computer (200, 201) is provided to compensate for the influence of incident light on the printing material.

2. Method according to Claim 1,
**characterized in**
**that** in at least one printing unit (5) of the printing press (5), the scanning device (6) is arranged near the printing nip (100) on that side of the printing unit (5) on which the printing material (705) exits.

3. Method according to any one of claims 1 to 2,
**characterized in**
**that** the scanning device (6) additionally takes densitometric measurements.

4. Method according to any one of the preceding claims,
**characterized in**
**that** the scanning device (6) also carries out register measuring, the detection of the positions of register marks and/or the detection of the type of the printing material (705).

5. Method according to any one of the preceding claims,
**characterized in**
**that** the scanning device (6) is installed in or downstream of the last printing unit (5) of the printing press (1) as viewed in the direction of printing material transport.

6. Method according to any one of the preceding claims,
**characterized in**
**that** the printing press (1) includes a sheet turning device (10) and that there is at least one scanning device (6) arranged upstream of the sheet turning device (10) and one scanning device (6) arranged downstream of the sheet turning device (10).

7. Method according to any one of the preceding claims,
**characterized in**
**that** the scanning device (6) is in the shape of a measuring bar.

8. Method according to claim 7,
**characterized in**
**that** the measuring bar (6) is supported to be movable in its longitudinal direction.

9. Method according to any one of the preceding claims,
**characterized in**
**that** the scanning device (6) is supported to be rotatable or extendable or that the scanning device (6) is exchangeable.

10. Method according to any one of claims 8 to 9,
**characterized in**
**that** the measuring bar (6) is in the shape of a U profile that is open in the direction of the printing material and receives at least one movable measuring carriage (605) in the interior of the U profile.

11. Method according to claim 10,
**characterized in**
**that** the measuring bar (6) includes at least one removable side wall (601).

12. Method according to Claim 10 or 11,
**characterized in**
**that** the measuring carriage (605) includes one or more measuring modules (603).

13. Method according to any one of Claims 10 to 12,
**characterized in**
**that** the measuring carriage (605) includes one or more register sensors (608, 613).

14. Method according to any one of the preceding claims,
**characterized in**
**that** the scanning device (6) includes at least one illumination device (610).

15. Method according to claim 14,
**characterized in**
**that** the lighting up of the illumination device (610) is synchronized with the measuring instant of the scanning device (6).

16. Method according to any one of Claims 10 to 15,
**characterized in**
**that** the measuring carriage (605) is driven by a motor (604) to move in the U profile.

17. Method according to any one of the preceding claims,
**characterized in**
**that** the scanning device (6) is simultaneously designed as a sheet-guiding element in a sheet-fed rotary printing press (1).

18. Method according to any one of the preceding claims,
**characterized in**
**that** the scanning device (6) identifies the position of a print-control strip (700) and records the measuring instant for a colour measurement.

19. Method according to any one of the preceding claims,
**characterized in**
**that** the scanning device (6) is connected to a computer (200, 201).

20. Method according to any one of the preceding claims,
**characterized in**
**that** the scanning device (6) includes one or more measuring modules (603) and that calibration data for each module (603) are stored in the computer (200, 201).

21. Method according to any one of the preceding claims,
**characterized in**
**that** the scanning device (6) is equipped with an Ethernet interface (619) or any other standardized computer interface (619).

22. Method according to claim 14 and any one of claims 15 to 21,
**characterized in**
**that** the illumination device (610) is provided with light guides (614) that are assigned to individual measuring modules (603) at one end and are assigned in a mixed bundle to at least one light source (610) at the other end.

23. Method according to any one of the preceding claims,
**characterized in**
**that** one or more temperature sensors are present in the scanning device (6).

24. Method according to claim 7 and claim 20 and any one of claims 12 to 19 and 21 to 23,
**characterized in**
**that** the electronic system (200, 201) for processing the signals of the measuring modules (603) is located outside the measuring bar.

25. Method according to claim 7 and claim 20 and any one of claims 12 to 19 and 21 to 23,
**characterized in**
**that** the electronic system for processing the signals of the measuring modules (603) is located inside the measuring bar (6) or inside the measuring modules (603).

26. Method according to claim 8 and claim 14 and any one of claims 12 to 25,
**characterized in**
**that** the illumination device (610) is located outside the measuring bar (6).

27. Method according to any one of claims 12 to 26,
**characterized in**
**that** the illumination device (610) is located outside the measuring carriage (605).

28. Method according to any one of claims 12 to 26,
**characterized in**
**that** the illumination device (610) is located in the measuring carriage (605).

29. Method according to claim 8 and any one of claims 12 to 27,
**characterized in**
**that** the illumination device (610) is located outside the movable measuring carriage (605), that end faces (626) of a first light guide bundle are located on the movable measuring carriage (605) and oriented in parallel towards each other and corresponding end faces (625) of a second light guide bundle are located on the measuring bar (6) and that the gap (624) between the two light guide bundles is bridgeable by optical means.

30. Method according to any one of the preceding claims,
**characterized in**
**that** the scanning device (6) is provided with a cooling device (602, 617, 621).

31. Method according to any one of the preceding claims,
**characterized in**
**that** the scanning device (6) is protected against dirt by a transparent cover (615, 616).

32. Method according to claim 31,
**characterized in**
**that** the transparent cover (616) is made of hardened glass.

33. Method according to claim 31 or 32,
**characterized in**
**that** the scanning device (6) includes a device for controlling the condition of the transparent cover (616).

34. Method according to any one of Claims 31 to 33,
**characterized in**
**that** the transparent cover (615, 616) is exchangeable.

35. Method according to claim 21 and any one of claims 12 to 34,
**characterized in**
**that** the measuring modules (603) are provided with at least one movable mechanical lid (627).

36. Method according to claim 35,
**characterized in**
**that** the mechanical lid (627) of the measuring modules (603) is controlled via one or more drives as a function of the operating condition of the printing press (1).

37. Method according to any one of the preceding claims,
**characterized in**
**that** the scanning device (6) comprises a sealed housing.

38. Method according to any one of the preceding claims,
**characterized in**
**that** one or more parts of the scanning device (6) are provided with dirt-repellent surfaces (628).

39. Method according to any one of the preceding claims,
**characterized in**
**that** cleaning tools are provided that are adapted to the shape of the scanning device (6) parts to be cleaned.

40. Method according to any one of claims 31 to 39,
**characterized in**
**that** webs (629) are arranged on the side facing the printing material of the transparent cover (615, 616) of the scanning device (6).

41. Method according to claim 40,
**characterized in**
**that** the webs (629) are designed to fold away from the cover (615, 616) or to be removable.

42. Method according to any one of the preceding claims,
**characterized in**
**that** the scanning device (6) is protected against the entrance of foreign bodies by air flowing out of the scanning device (6).

## Revendications

1. Procédé pour la surveillance de qualité d'impression pendant le processus d'impression dans une machine d'impression (1) pour le traitement de support d'impression en forme de feuille (705) avec au moins un groupe d'impression (4, 5) et un dispositif d'exploration (6) détectant le support d'impression (705) ainsi qu'un ordinateur (201, 200), le support d'impression en forme de feuille (705) étant au moins guidé par au moins un élément de guidage de feuille (100, 101) le long d'un dispositif de balayage (6) et le dispositif de balayage (6) mesurant le support d'impression en forme de feuille (705) selon les couleurs ou selon le spectre,
le support d'impression (705) étant maintenu dans le groupe d'impression (5) pendant l'opération d'exploration par une pince de transport (101) d'un tambour de guidage de feuille (7) et par une fente d'impression (100) du groupe d'impression (5)
**caractérisé en ce**
**qu'**un dispositif de compensation relié à l'ordinateur (200, 201) compense l'influence de la lumière incidente sur le support d'impression

2. Procédé selon la revendication 1,
**caractérisé en ce**
**que** le dispositif d'exploration (6) est placé près de la fente d'impression (100) dans au moins un groupe d'impression (5) de la machine d'impression (1) sur la face du groupe d'impression (5) délivrant le support d'impression (705).

3. Procédé selon l'une des revendications 1 à 2,
**caractérisé en ce**
**que** le dispositif d'exploration (6) mesure en plus par densitométrie.

4. Procédé selon l'une des revendications précédentes,
**caractérisé en ce**
**que** le dispositif d'exploration (6) effectue également la mesure de registre, la détection de position de marques de repérage et/ou la détermination du type de support d'impression (705) .

5. Procédé selon l'une des revendications précédentes,
**caractérisé en ce**
**que** le dispositif d'exploration (6) est monté dans ou après le dernier groupe d'impression (5) de la machine d'impression (1), vu dans la direction de transport du support d'impression.

6. Procédé selon l'une des revendications précédentes,
**caractérisé en ce**
**que** la machine d'impression (1) présente un dispositif de renvoi de feuille (10) et en ce qu'au moins un dispositif d'exploration (6) est disposé devant le dispositif de renvoi de feuille (10) et un dispositif d'exploration (6) après le dispositif de renvoi de feuille (10).

7. Procédé selon l'une des revendications précédentes,
**caractérisé en ce**
**que** le dispositif d'exploration (6) présente la forme d'une barre de mesure.

8. Procédé selon la revendication 8,
**caractérisé en ce**
**que** la barre de mesure (6) est logée coulissante dans sa direction longitudinale.

9. Procédé selon l'une des revendications précédentes,
**caractérisé en ce**
**que** le dispositif d'exploration (6) est logé rotatif ou extractible ou échangeable.

10. Procédé selon l'une des revendications 7 à 9,
**caractérisé en ce**
**que** la barre de mesure (6) présente la forme d'un profil en U ouvert en direction du support d'impression et loge à l'intérieur du profilé en U au moins un chariot de mesure mobile (605).

11. Dispositif selon la revendication 10,
**caractérisé en ce**
**que** la barre de mesure (6) présente au moins une paroi latérale amovible (601).

12. Procédé selon la revendication 10 ou 11,
**caractérisé en ce**
**que** le chariot de mesure (605) présente un ou plusieurs modules de mesure (603).

13. Procédé selon l'une des revendications 10 à 12,
**caractérisé en ce**
**que** le chariot de mesure (605) présente un ou plusieurs capteurs de repérage (608, 613).

14. Procédé selon l'une des revendications précédentes,
**caractérisé en ce**
**que** le dispositif d'exploration (6) présente au moins un dispositif d'éclairage (610).

15. Procédé selon la revendication 14,
**caractérisé en ce**
**que** l'éclairage du dispositif d'éclairage (610) s'effectue de manière synchronisée avec le moment de mesure du dispositif d'exploration (6).

16. Procédé selon l'une des revendications 10 à 15,
**caractérisé en ce**
**que** le chariot de mesure (605) se déplace dans le profilé en U entraîné par un moteur (604).

17. Procédé selon l'une des revendications précédentes,
**caractérisé en ce**
**que** le dispositif d'exploration (6) dans une machine d'impression rotative de feuille sert également en même temps d'élément de guidage de feuille.

18. Procédé selon l'une des revendications précédentes,
**caractérisé en ce**
**que** la position d'une bande de contrôle d'impression (700) est captée et le moment de la mesure pour une mesure d'encre est détecté au moyen du dispositif d'exploration (6).

19. Procédé selon l'une des revendications précédentes,
**caractérisé en ce**
**que** le dispositif d'exploration (6) est raccordé à un ordinateur (200, 201).

20. Procédé selon l'une des revendications précédentes,
**caractérisé en ce**
**que** le dispositif d'exploration (6) présente un ou plusieurs modules de mesure (603) et des données de calibrage pour chaque module (603) sont stockées dans l'ordinateur (200, 201).

21. Procédé selon l'une des revendications précédentes,
**caractérisé en ce**
**que** le dispositif d'exploration (6) dispose d'une interface Ethernet (619) ou d'une autre interface informatique standardisée (619).

22. Procédé selon la revendication 15 et les revendications 15 à 21,
**caractérisé en ce que**
le dispositif d'éclairage est muni de conducteurs de lumière (614) qui sont associés à une extrémité à chacun des modules de mesure (603) et à l'autre extrémité sont disposés en faisceau mélangés d'au moins une source lumineuse (610).

23. Procédé selon l'une des revendications précédentes,
**caractérisé en ce**
**qu'**un ou plusieurs capteurs thermiques sont présents dans le dispositif d'exploration (6).

24. Procédé selon la revendication 8 et la revendication 21 et les revendications 13 à 20 et 22 à 24,
**caractérisé en ce**
**que** l'électronique (200, 201) de traitement de signaux des modules de mesure (603) se trouve à l'extérieur de la barre de mesure.

25. Procédé selon la revendication 7 et la revendication 20 et les revendications 12 à 19 et 21 à 23,
**caractérisé en ce que**
l'électronique de traitement de signaux des modules de mesure (603) se trouve à l'intérieur de la barre de mesure (603) ou des modules de mesure (603).

26. Procédé selon la revendication 8 et la revendication 14 et l'une des revendications 12 à 26,
**caractérisé en ce**
**que** le dispositif d'éclairage (610) se troue à l'extérieur de la barre de mesure (6).

27. Procédé l'une des revendications 12 à 26,
**caractérisé en ce**
**que** le dispositif d'éclairage (610) se trouve à l'extérieur du chariot de mesure (605).

28. Procédé selon l'une des revendications 12 à 26,
**caractérisé en ce**
**que** le dispositif d'éclairage (610) se trouve dans le chariot de mesure (605).

29. Procédé selon la revendication 8 et les revendications 12 à 27,
**caractérisé en ce**
**que** le dispositif d'éclairage (610) se trouve à l'extérieur du chariot de mesure mobile (605), que des surfaces frontales (626) orientées parallèlement sur le chariot de mesure mobile (605), d'un premier faisceau de conducteurs de lumière et des surfaces frontales correspondantes (625) d'un second faisceau de conducteurs de lumière sont prévues sur la barre de mesure (6) et l'intervalle (624) entre les faisceaux de conducteurs de lumière est franchissable par des moyens optiques.

30. Procédé selon l'une des revendications précédentes,
**caractérisé en ce**
**que** le dispositif d'exploration (6) est muni d'un dispositif de refroidissement (602, 617, 621).

31. Procédé selon l'une des revendications précédentes,
**caractérisé en ce**
**que** le dispositif d'exploration (6) est protégé de l'encrassement au moyen d'un couvercle transparent (615, 616).

32. Procédé selon la revendication 31,
**caractérisé en ce**
**que** le couvercle transparent (616) se compose de verre durci.

33. Procédé selon la revendication 31 ou 32,
**caractérisé en ce**
**que** le dispositif d'exploration (6) comporte un dispositif pour le contrôle de l'état du couvercle transparent (616).

34. Procédé selon l'une des revendications 31 à 33,
**caractérisé en ce**
**que** le couvercle transparent (615, 616) est interchangeable.

35. Procédé selon la revendication 21 et l'une des revendications 12 à 34,
**caractérisé en ce**
**que** les modules de mesure (603) sont munis d'au moins une fermeture mécanique mobile (627).

36. Procédé selon la revendication 35,
**caractérisé en ce**
**que** le dispositif de fermeture mécanique (627) des modules de mesure (603) est commandé par un ou plusieurs entraînements en fonction de l'état de service de la machine d'impression (1).

37. Procédé selon l'une des revendications précédentes
**caractérisé en ce**
**que** le dispositif d'exploration (6) comprend un coffret étanche.

38. Procédé selon l'une des revendications précédentes
**caractérisé en ce**
**qu'**une ou plusieurs parties du dispositif d'exploration (6) sont munies de surfaces anti-poussières (628).

39. Procédé selon l'une des revendications précédentes
**caractérisé en ce**
**qu'**il est prévu des outils de nettoyage qui sont adaptés à la forme des parties du dispositif d'exploration (6) à nettoyer.

40. Procédé selon l'une des revendications 31 à 39,
**caractérisé en ce**
**que** des traverses (629) sont disposées sur la face tournée vers le support d'impression, du couvercle transparent (615, 616), du dispositif d'exploration (6).

41. Procédé selon la revendication 41,
**caractérisé en ce**
**que** les traverses (629) sont réalisées amovibles ou rabattables par rapport au couvercle (615, 616).

42. Procédé selon l'une des revendications précédentes,
**caractérisé en ce**
**que** le dispositif d'exploration (6) est protégé contre la pénétration de corps étrangers par de l'air sortant du dispositif d'exploration (6).
